# EUROPÄISCHE PATENTSCHRIFT

(11) **EP 2 181 485 B1**
(45) Veröffentlichungstag und Bekanntmachung des Hinweises auf die Patenterteilung: **25.03.2020**
(21) Anmeldenummer: 08786146.4
(22) Anmeldetag: 14.07.2008
(51) Int. Cl.: H02G 3/04, H02G 3/06

(54) **LEITUNGSAUFNAHMEEINHEIT**
CABLE RECEIVING UNIT
UNITÉ DE LOGEMENT POUR CÂBLES

(30) Priorität: 19.07.2007 DE 102007035047; 04.08.2007 DE 102007036948
(43) Veröffentlichungstag der Anmeldung: 05.05.2010
(73) Patentinhaber: Lapp Engineering & Co., 6330 Cham (CH)
(72) Erfinder: LAPP, Siegbert, 70599 Stuttgart (DE)
(74) Vertreter: Hoeger, Stellrecht & Partner Patentanwälte mbB
(86) Internationale Anmeldenummer: PCT/EP2008/059196
(87) Internationale Veröffentlichungsnummer: WO 2009/010497

(56) Entgegenhaltungen:
- WO-A-2006/063023
- WO-A-2007/016956
- WO-A-2007/036346

## Beschreibung

Die Erfindung betrifft eine Leitungsaufnahmeeinheit für einen Leitungsstrang.

Derartige Leitungsaufnahmeeinheiten sind üblicherweise Steckverbinderelemente, Kabelverschraubungen oder ähnliche, mit einem Leitungsstrang verbundene Elemente, die bei vorkonfektionierten Leitungssträngen als fertig aufgebauter Leitungssatz vertrieben werden oder Leitungsaufnahmeeinheiten, die üblicherweise in Geräten montiert werden und dazu dienen, eine Verbindung zwischen dem Gerät und einem Leitungsstrang herzustellen.

Die WO 2006/063023 A1 offenbart ein Telekommunikations-Patch-System mit einer Vielzahl von Anschlüssen und einer Vielzahl von Patchkabeln, wobei Stecker von den Patchkabeln mit einem RFID-Tag, auf welchem eine das Kabel eindeutig identifizierende Kennung gespeichert ist, versehen sind. Die WO 2007/036346 A2 betrifft Akkumulatoren mit einem Anschluss für einen Verbraucher oder eine Ladevorrichtung und ist auf die Identifizierung des Akkumulators gerichtet.

Bei derartigen Leitungsaufnahmeeinheiten besteht vielfach das Problem, Daten über dieselben oder eine Einbauumgebung oder Spezifikationen derselben zuverlässig einem Benutzer zu übermitteln.

Der Erfindung liegt daher die Aufgabe zugrunde, eine derartige Übermittlung von Daten zuverlässig und einfach erfassbar zu gestalten.

Diese Aufgabe wird bei einer Leitungsaufnahmeeinheit der eingangs beschriebenen Art erfindungsgemäß durch die Merkmalskombination des Anspruchs 1 gelöst.

Der Vorteil dieser Lösung ist darin zu sehen, dass mit einer derartigen Informationsträgereinheit die Möglichkeit besteht, einerseits eine Vielzahl von Informationen und andererseits auch komplexe, teilweise sogar auf das einzelne Produkt bezogene Informationen zu speichern und einem Benutzer durch Auslesen zugänglich zu machen.

Hinsichtlich der Anordnung der Informationsträgereinheit in der Leitungsaufnahmeeinheit sind die unterschiedlichsten Lösungen denkbar.

So sieht eine vorteilhafte Lösung vor, dass die Informationsträgereinheit an einem Basisteil der Leitungsaufnahmeeinheit angeordnet ist.

Prinzipiell könnte dabei die Informationsträgereinheit auf dem Basisteil angeordnet sein.

Besonders geschützt ist die Informationsträgereinheit dann, wenn sie in dem Basisteil angeordnet ist.

Eine derartige Anordnung der Informationsträgereinheit in dem Basisteil ist vorteilhafter weise dadurch realisiert, dass die Informationsträgereinheit in einer Ausnehmung des Basisteils angeordnet ist.

Die Ausnehmung kann an unterschiedlichen Seiten des Basisteils angeordnet sein.

Eine besonders geschützte Anordnung der Informationsträgereinheit sieht vor, dass die Ausnehmung sich von einem Innenraum des Basisteils in dieses hineinerstreckt.

Damit ist ein optimaler Schutz der Informationsträgereinheit gewährleistet.

Andererseits besteht das Problem, dass bei einer Ausbildung des Basisteils als Metallteil Dämpfungseffekte durch das Metall eintreten, die die elektromagnetische Feldkopplung zum Auslesen der Informationen aus der Informationsträgereinheit unterdrücken oder zumindest beeinträchtigen.

Aus diesem Grund ist vorteilhafterweise vorgesehen, dass die Ausnehmung sich von einer Außenseite des Basisteils in dieses hineinerstreckt.

Ist beispielsweise bei einem derartigen Ausführungsbeispiel das Basisteil aus Metall ausgebildet, so ist vorzugsweise zwischen der Informationsträgereinheit und dem Metall eine Störeinflüsse des Metalls abschirmende Schicht oder Lage, vorzugsweise Ferrit vorgesehen, welche das zur Kommunikation in der Informationsträgereinheit erforderliche elektromagnetische Feld gegenüber dem Metall abschirmt und somit eine Kommunikation zwischen einem Schreib-/Lesegerät und der Informationsträgereinheit über elektromagnetische Felder und auch magnetische Felder zulässt.

Vorzugsweise erfolgt in einem derartigen Fall die Kommunikation im LF- oder HF-Frequenzbereich.

Ferner ist vorzugsweise in einem derartigen Fall zwischen einer Antenneneinheit der Informationsträgereinheit und der das elektromagnetische Feld gegenüber dem Metall abschirmenden Schicht noch eine Abstandsschicht vorzusehen, eine möglichst optimale Ausbreitung des die Antenneneinheit durchsetzenden elektromagnetischen Feldes zuzulassen.

Eine andere vorteilhafte Möglichkeit sieht vor, dass die Informationsträgereinheit in das Basisteil eingebettet ist. Eine derartige Einbettung der Informationsträgereinheit in das Basisteil ist insbesondere dann realisierbar, wenn das Basisteil als Kunststoffteil, insbesondere als Kunststoffspritzgussteil, hergestellt wird.

Darüber hinaus sieht eine vorteilhafte Anordnung der Informationsträgereinheit in der Leitungsaufnahmeeinheit vor, dass die Informationsträgereinheit einer in der Leitungsaufnahmeeinheit vorgesehenen Aufnahme für den Leitungsstrang zugeordnet ist.

Dabei kann die Aufnahme für den Leitungsstrang an dem Basisteil angeordnet sein.

Es ist aber auch denkbar, dass der Aufnahme eine Halteeinheit der Leitungsaufnahmeeinheit zugeordnet ist.

In diesem Fall ist vorteilhafterweise vorgesehen, dass die Informationsträgereinheit in einer an dem Leitungsstrang angreifenden Halteeinheit der Leitungsaufnahmeeinheit angeordnet ist.

Besonders günstig ist es, insbesondere dann, wenn die Informationsträgereinheit möglichst nahe an dem Leitungsstrang angeordnet sein soll, wenn die Informationsträgereinheit in einem kraftschlüssig an dem Leitungsstrang anliegenden Teil der Halteeinheit angeordnet ist, so dass beispielsweise Informationen auch über den Leitungsstrang von der Informationsträgereinheit erfasst werden können.

Im einfachsten Fall ist eine derartige Anordnung der Informationsträgereinheit dann realisierbar, wenn die Informationsträgereinheit in einer an der Halteeinheit vorgesehenen Ausnehmung angeordnet ist.

Alternativ zur Ausbildung der Aufnahme als Halteelement sieht eine andere vorteilhafte Lösung vor, dass die Aufnahme ein ein Endstück des Leitungsstrangs umschließendes Schutzelement ist.

Ein derartiges Schutzelement kann beispielsweise eine Schutzhülle für den Leitungsstrang oder ein Blickschutz für den Leiterstrang sein.

Dabei ist es beispielsweise denkbar, dass die Informationsträgereinheit an dem Schutzelement angeordnet ist.

Eine Anordnung der Informationsträgereinheit an dem Schutzelement lässt sich beispielsweise dadurch realisieren, dass die Informationsträgereinheit in einem Wandabschnitt des Schutzelements angeordnet ist, wobei der Wandabschnitt entweder eine Ausnehmung aufweist oder die Informationsträgereinheit in den Wandabschnitt eingebettet ist.

Eine andere vorteilhafte Lösung sieht vor, dass die Informationsträgereinheit von dem Schutzelement abgedeckt angeordnet ist.

Das heißt, dass in diesem Fall die Informationsträgereinheit nicht mehr unmittelbar an dem Schutzelement gehalten ist, sondern von diesem primär abgedeckt ist.

Eine Informationsträgereinheit könnte beispielsweise vorsehen, dass die Informationsträgereinheit durch das Schutzelement überdeckt und beispielsweise durch das Schutzelement an dem Endstück des Leitungsstrangs fixiert, beispielsweise kraftschlüssig fixiert, gehalten ist.

Eine zweckmäßige Ausführungsform sieht außerdem vor, dass die Informationsträgereinheit an dem Endstück des Leitungsstrangs angeordnet ist und somit primär an dem Endstück des Leitungsstrangs sitzt und lediglich durch das Schutzelement abgedeckt ist.

Dabei ist beispielsweise vorgesehen, dass die Informationsträgereinheit auch unmittelbar an dem Endstück fixiert ist, beispielsweise dadurch, dass die Informationsträgereinheit auf das Endstück aufgeklebt ist.

Hinsichtlich der Anordnung des Schutzelements als Teil der Leitungsaufnahmeeinheit relativ zu Gehäuseteilen der Leitungsaufnahmeeinheit sieht ein vorteilhaftes Ausführungsbeispiel vor, dass das Schutzelement an einem Gehäuseteil der Leitungsaufnahmeeinheit gehalten ist.

Vorzugsweise ist dabei vorgesehen, dass das Schutzelement mit einem Halteansatz versehen ist, der an dem Gehäuseteil der Leitungsaufnahmeeinheit gehalten ist.

Üblicherweise ist dabei das Schutzelement so ausgebildet, dass es sich über dieses haltende Gehäuseteil hinaus erstreckt, das heißt, dass das Schutzelement als Teil der Leitungsaufnahmeeinheit sich von dem Gehäuseteil oder den Gehäuseteilen der Leitungsaufnahmeeinheit weg erstreckt und somit als einziges noch in diesem Bereich noch das Endstück umgibt.

Um eine möglichst optimale Ankopplung zwischen der Informationsträgereinheit und einem Schreib-/Lesegerät zum Austausch von Daten mit der Informationsträgereinheit zu erhalten, ist vorzugsweise vorgesehen, dass das Schutzelement aus einem elektrisch und magnetisch nicht leitenden Material ausgebildet ist.

Vorzugsweise ist dabei das Schutzelement aus Gummi oder Kunststoff hergestellt.

Um außerdem eine ausreichende Schutzwirkung für das Endstück des Leitungsstrangs zu entfalten und einen für den Leitungsstrang schonenden Übergang von einem flexiblen Leitungsstrang zu den starren Gehäuseteilen der Leitungsaufnahmeeinheit zu schaffen, ist vorgesehen, dass das Schutzelement aus einem verformbaren Material ist, das heißt, dass das Schutzelement zumindest biegbar ist.

Eine andere vorteilhafte Möglichkeit der Anordnung der Informationsträgereinheit sieht vor, dass die Informationsträgereinheit einem Kontaktträger der Leitungsaufnahmeeinheit zugeordnet ist.

Eine derartige Zuordnung zu einem Kontaktträger lässt sich ebenfalls in vielfacher Art und Weise realisieren, sofern der Kontaktträger in einem elektrisch nicht leitenden Gehäuse angeordnet ist.

So sieht eine vorteilhafte Lösung vor, dass die Informationsträgereinheit in dem Kontaktträger angeordnet ist.

Dies lässt sich beispielsweise vorteilhaft dadurch realisieren, dass die Informationsträgereinheit in einer Ausnehmung des Kontaktträgers angeordnet ist.

Alternativ dazu ist vorgesehen, dass die Informationsträgereinheit in das Material des Kontaktträgers eingebettet ist.

Hinsichtlich der Anordnung der Informationsträgereinheit in einer Ausnehmung sind die unterschiedlichsten Lösungen denkbar. Beispielsweise könnte die Informationsträgereinheit in die Ausnehmung eingeklebt werden.

Besonders sicher und zuverlässig ist die Informationsträgereinheit in der Ausnehmung jedoch dann angeordnet, wenn die Informationsträgereinheit in der jeweiligen Ausnehmung durch eine Vergussmasse fixiert und somit durch die Vergussmasse hermetisch gegenüber der Umgebung gekapselt ist.

Hinsichtlich der in der Informationsträgereinheit abgelegten Daten, die dann durch elektromagnetische Feldkopplung auslesbar sind, wurden bislang keine näheren Angaben gemacht.

So sieht eine vorteilhafte Lösung vor, dass aus der Informationsträgereinheit konstruktive Daten auslesbar sind, das heißt, Daten über den konstruktiven Aufbau der Leitungsaufnahmeeinheit.

Ferner ist es günstig, wenn aus der Informationsträgereinheit Funktionsdaten auslesbar sind, das heißt in diesem Fall, dass die Funktionsdaten Informationen darüber aufweisen, wie eine elektrische Verschaltung des Leitungsstrangs oder der Kontakte der Leitungsaufnahmeeinheit vorzunehmen ist.

Besonders vorteilhaft ist es, wenn aus der Informationsträgereinheit Daten eines die Leitungsaufnahmeeinheit umfassenden Leitungssatzes auslesbar sind, das heißt, dass die Daten über den gesamten Leitungssatz, dessen Bestandteil die Leitungsaufnahmeeinheit ist, in der Informationsträgereinheit gespeichert sind.

Dies können einerseits Daten der internen Verschaltung in dem Leitungssatz sein.

Es ist aber ebenfalls denkbar, dass es sich um Daten über geeignete Umgebungsbedingungen für den Leitungssatz oder über die Einsatzgebiete des Leitungssatzes oder auch über die Lebensdauer des Leitungssatzes unter definierten Umweltbedingungen handelt.

Eine besonders günstige Lösung sieht vor, dass aus der Informationsträgereinheit Messdaten des Leitungssatzes auslesbar sind. Das heißt, dass der fertig montierte Leitungssatz vermessen ist und diese Messdaten in der Informationsträgereinheit gespeichert sind, so dass ein Benutzer unmittelbar erkennen kann, in welchem Umfang und in welchem Maße der erfindungsgemäße Leitungssatz die Spezifikationen erfüllt oder übererfüllt und somit im Fall von Grenzbelastungen einsetzbar ist.

Hinsichtlich des Aufbaus der erfindungsgemäßen Informationsträgereinheit wurden bislang keine näheren Angaben gemacht.

Im Rahmen der erfindungsgemäßen Lösung ist es jedoch nicht nur denkbar, dass die Informationsträgereinheit selbst Daten trägt und dass Daten aus dieser auslesbar sind, sondern es ist bei einer weiteren vorteilhaften Variante der erfindungsgemäßen Lösung vorgesehen, dass die Informationsträgereinheit mit einer weiteren Informationsträgereinheit kommuniziert.

Beispielsweise ist hierzu die weitere Informationsträgereinheit eine unabhängig von dem Leitungssatz angeordnete Informationsträgereinheit.

Eine derartige unabhängig von dem Leitungssatz angeordnete Informationsträgereinheit ist beispielsweise an einer dem Leitungssatz zugeordneten Einrichtung angeordnet.

Eine derartige Einrichtung kann beispielsweise ein Gerät sein, mit welchem der Leitungssatz zu verbinden ist oder die Einrichtung kann einfach eine Aufnahme sein, in welche der Leitungssatz in beliebiger Weise einbaubar oder installierbar ist.

Insbesondere lassen sich bei sicherheitsrelevanten Zuordnungen zwischen Leitungssatz und Einrichtung die Informationsträgereinheiten dahingehend einsetzen, dass mittels mindestens einer der Informationsträgereinheiten die Richtigkeit der Zuordnung des Leitungssatzes und der Einrichtung überprüfbar ist.

Eine einfache Möglichkeit der Überprüfung der Zuordnung erfolgt mittels eines mobilen Schreib-/Lesegeräts, welches die Informationen aus einer Informationsträgereinheit des Leitungssatzes und einer Informationsträgereinheit der Einrichtung separat ausliest und daraus die Zuordnung ermittelt.

Eine derartige Überprüfung kann beispielsweise auch dadurch erfolgen, dass die Informationsträgereinheiten Daten untereinander austauschen und dass die mindestens eine, beispielsweise durch ein Schreib-/Lesegerät aktivierte, Informationsträgereinheit erkennt, ob die andere Informationsträgereinheit die aufgrund der Zuordnung richtige Informationsträgereinheit ist.

Um fehlerhafte Zuordnungen zwischen Leitungssatz und Einrichtung zu vermeiden, wird vorzugsweise vorgesehen, dass mittels der mindestens einen Informationsträgereinheit die Richtigkeit oder Unrichtigkeit der Zuordnung anzeigbar ist.

Eine derartige Anzeige kann beispielsweise dadurch erfolgen, dass über ein Schreib-/Lesegerät ein Auslesen der einen Informationsträgereinheit durchgeführt wird.

Noch einfacher lässt sich ein derartiges Anzeigen dann realisieren, wenn die mindestens eine aktivierte Informationsträgereinheit mit einer optischen Anzeige versehen ist.

Eine andere vorteilhafte Ausführungsform der erfindungsgemäßen Lösung sieht vor, dass die Informationsträgereinheit mit mindestens einer Informationsträgereinheit in dem Leitungsstrang kommuniziert.

Dabei könnte das Kommunizieren mit der mindestens einen Informationsträgereinheit in dem Leitungsstrang über eine elektrische Kontaktierung erfolgen.

Besonders günstig ist es jedoch, wenn die Informationsträgereinheit mit der mindestens einen Informationsträgereinheit kontaktierungsfrei kommuniziert.

Insbesondere ist es günstig, wenn die Informationsträgereinheit mit der mindestens einen Informationsträgereinheit im Leitungsstrang über elektromagnetische Felder kommuniziert.

Dabei könnten die Informationsträgereinheiten direkt über abgestrahlte elektromagnetische Felder miteinander kommunizieren. Eine derartige direkte Kommunikation über elektromagnetische Felder erfordert jedoch eine relativ eng beieinander liegende Anordnung der Informationsträgereinheiten relativ zueinander, insbesondere der in dem Leitungsstrang vorgesehene Informationsträgereinheit relativ zu der in der Leitungsaufnahmeeinheit vorgesehenen Informationsträgereinheit.

Eine Verbesserung der Kommunikation lässt sich dadurch erreichen, dass die Informationsträgereinheit mit der mindestens einen Informationsträgereinheit über in mindestens zwei elektrische Leitungen des Leiterstrangs erzeugte parasitäre elektromagnetische Felder in Wechselwirkung tritt.

Der Vorteil dieser Lösung ist darin zu sehen, dass durch die parasitäre elektromagnetische Feldkopplung mit mindestens zwei Leitungen eines Innenkörpers des Leitungsstrangs eine wirksame Antennenreichweite, insbesondere in Längsrichtung des Leitungsstrangs, erhältlich ist, die wesentlich größer ist, als die Antennenreichweite der Antenneneinheit in ungestörter Umgebung ohne Leitungsstrang.

Besonders günstig lässt sich die Kopplung zwischen der Antenneneinheit der Informationsträgereinheit und dem Schreib-/Lesegerät dann gestalten, wenn die mindestens zwei elektrischen Leitungen des Innenkörpers das parasitäre elektromagnetische Feld in einem durch die Antenneneinheit der Informationsträgereinheit vorgegebenen Frequenzbereich aufbauen und abstrahlen, wobei die Anregung in dem durch die Antenneneinheit der Informationsträgereinheit vorgegebenen Frequenzbereich erfolgt, in dem üblicherweise die Antenneneinheit der Informationsträgereinheit resonant arbeitet, um optimale Empfangs- und Sendebedingungen seitens der Antenneneinheit der Informationsträgereinheit zu schaffen. Insbesondere ist damit auch verbunden, dass Frequenzbereiche der Antenneneinheiten der Informationsträgereinheiten im Wesentlichen übereinstimmen.

Um eine parasitäre Abstrahlung der mindestens zwei elektrischen Leitungen zu erhalten, ist vorzugsweise vorgesehen, dass die mindestens zwei elektrischen Leitungen in dem Frequenzbereich des parasitären elektromagnetischen Feldes nichtresonant zusammenwirken, so dass Empfang und Abstrahlung seitens der elektrischen Leitungen möglich sind.

Vorzugsweise ist dabei vorgesehen, dass die mindestens zwei elektrischen Leitungen sich dipolähnlich verhalten und die Antenneneinheiten durch die sich dabei ausbildenden parasitären elektromagnetischen Felder mit den elektrischen Leitungen koppelbar ist.

Besonders günstig sind die mindestens zwei elektrischen Leitungen für die Erzeugung eines parasitären elektromagnetischen Feldes einsetzbar, wenn die mindestens zwei elektrischen Leitungen im Innenkörper des Leitungsstrangs galvanisch voneinander getrennt sind, so dass sie nicht im Sinne einer Spule wirken, sondern sich wie eine Mehrdrahtleitung im Leerlauf verhalten können.

Hinsichtlich des Verlaufs der mindestens zwei elektrischen Leitungen in dem Innenkörper des Leitungsstrangs wurden bislang keine näheren Angaben gemacht. So sieht eine vorteilhafte Lösung vor, dass die mindestens zwei elektrischen Leitungen im Wesentlichen in konstantem Abstand voneinander in einem Innenkörper des Leitungsstranges verlaufen.

Noch vorteilhafter ist es, wenn die mindestens zwei elektrischen Leitungen im Wesentlichen parallel zueinander verlaufen.

Im Zusammenhang mit der bisherigen Lösung wurde lediglich darauf eingegangen, dass mindestens zwei ein parasitäres elektromagnetisches Feld aufbauende elektrischen Leitungen vorhanden sind.

Besonders vorteilhaft ist es jedoch, wenn die mindestens zwei elektrischen Leitungen mit mindestens einer weiteren optischen und/oder elektrischen Leitung oder mehreren weiteren optischen und/oder elektrischen Leitern verseilt sind, so dass ein derartiger Leitungsstrang in vollem Umfang konventionell genutzt werden kann.

Dabei können die mindestens zwei elektrischen Leitungen, die zum Aufbau eines parasitären elektromagnetischen Feldes eingesetzt werden, völlig isoliert in dem Innenkörper vorgesehen sein und nicht für eine übliche Kabelfunktion eingesetzt werden.

Es besteht aber auch die Möglichkeit, über die mindestens zwei elektrischen Leitungen Signale oder Strom zu übertragen, ohne dass dadurch der Aufbau eines parasitären elektrischen Feldes gestört wird, da diese in einem Frequenzbereich liegt, der nicht mit einem üblichen Einsatz der elektrischen Leitungen in Kabel interferiert.

Für die Wechselwirkung mit einem derartigen parasitären elektromagnetischen Feld, aufgebaut durch die mindestens zwei elektrischen Leitungen, ist es zweckmäßig, wenn die Antenneneinheit der Informationsträgereinheit als Dipolantenne ausgebildet ist.

Derartige Dipolantennen können dabei in unterschiedlicher Art und Weise im Leitungsstrang ausgerichtet sein.

Eine vorteilhafte Ankopplung an die mindestens zwei elektrischen Leitungen ist dann gegeben, wenn eine Komponente der Dipolstrahlungsrichtung quer zu einer Verseilrichtung der Leitungen im Innenkörper verläuft, da dadurch eine optimale Wechselwirkung zwischen der Dipolantenne und den mindestens zwei elektrischen Leitungen möglich ist, um optimal mit dem parasitären elektromagnetischen Feld in Wechselwirkung treten zu können.

Ein besonders vorteilhaftes Ausführungsbeispiel sieht vor, dass in Längsrichtung des Leitungsstrangs eine Vielzahl von Informationsträgereinheiten angeordnet ist, wobei die Informationsträgereinheiten im Abstand voneinander angeordnet sind und jede dieser Informationsträgereinheiten eine Antenneneinheit aufweist.

Dabei könnten die Informationsträgereinheiten in Längsrichtung des Leitungsstrangs in statistisch variierenden Abständen voneinander angeordnet sein.

Um die Kommunikation mit den Informationsträgereinheiten zu optimieren und insbesondere deren Lage relativ zueinander für die Kommunikation optimieren zu können, ist vorzugsweise vorgesehen, dass die Vielzahl der Informationsträgereinheiten in Längsrichtung des Leitungsstrangs in einem definierten Abstandsraster angeordnet ist.

Besonders günstig ist es dabei, wenn das definierte Abstandsraster für die Informationsträgereinheiten einen einheitlichen Abstand zwischen den Informationsträgereinheiten in Längsrichtung des Leitungsstrangs vorgibt, so dass bei Auffinden einer Informationsträgereinheit auch zwangsläufig die anderen Informationsträgereinheiten lokalisiert werden können.

Die in Längsrichtung des Leitungsstrangs im Abstand voneinander angeordneten Informationsträgereinheiten können grundsätzlich völlig isoliert voneinander betrieben werden, so dass jede einzelne Informationsträgereinheit durch das Schreib-/Lesegerät angesprochen werden muss, ohne dass es auf die anderen Informationsträgereinheiten ankommt.

Insbesondere ist vorgesehen, dass die Antenneneinheit einer der Informationsträgereinheiten mit der Antenneneinheit einer anderen der Informationsträgereinheiten durch elektromagnetische Feldkopplung koppelbar ist.

In diesem Fall besteht beispielsweise die Möglichkeit, Information von mindestens einer der Informationsträgereinheiten auf die andere der Informationsträgereinheiten weiter zu übertragen, gegebenenfalls noch auf weitere Informationsträgereinheiten ebenfalls dadurch zu übertragen, dass die Informationen von Informationsträgereinheit zu Informationsträgereinheit weitergeleitet werden.

Eine derartige Informationsübertragung ist beispielsweise in einfacher Weise dann möglich, wenn in Kabellängsrichtung jeweils aufeinander folgende Antenneneinheiten der Informationsträgereinheiten miteinander koppelbar sind.

Eine besonders günstige Lösung sieht vor, dass eine der Informationsträgereinheiten jeweils mit der in Längsrichtung des Leitungsstrangs nächstliegenden Informationsträgereinheit kommuniziert.

Die Kopplung der Antenneneinheiten könnte primär dadurch erfolgen, dass die Antenneneinheiten relativ zueinander im Abstand der üblichen Antennenreichweite angeordnet sind, das heißt der Antennenreichweite ohne Beeinflussung seitens der Umgebung. Dies hat jedoch den Nachteil, da die Antennenreichweiten nicht sehr groß sind, dass die Informationsträgereinheiten in geringerem Abstand voneinander angeordnet werden müssten.

Daher ist es günstig, wenn die Antenneneinheiten der Informationsträgereinheiten über parasitäre elektromagnetische Feldkopplung über die mindestens zwei elektrischen Leiterstränge des Kabelinnenkörpers koppelbar sind. Eine derartige parasitäre elektromagnetische Feldkopplung erlaubt es, eine wirksame Antennenreichweite zu erhalten, die wesentlich größer als die Antennenreichweite im unbeeinflussten Zustand ist.

Besonders günstig ist es dabei, wenn durch die parasitäre elektromagnetische Feldkopplung zwischen der Antenneneinheit und den mindestens zwei Leitersträngen eine wirksame Antennenreichweite der Antenneneinheit in Kabellängsrichtung erhältlich ist, die gegenüber einer umgebungsunbeeinflussten Antennenreichweite der Antenneneinheit um einen Faktor von mehr als zwei vergrößert ist.

Besonders vorteilhaft ist es dabei, wenn die wirksame Antennenreichweite um einen Faktor von mehr als fünf, noch besser einen Faktor von mehr als zehn gegenüber der unbeeinflussten Antennenreichweite vergrößert ist.

In dem Fall, in dem die einzelnen Antenneneinheiten in einem erfindungsgemäßen Kabel isoliert und ohne Wechselwirkung miteinander betrieben werden sollen, ist vorzugsweise jedoch vorgesehen, dass die Informationsträgereinheiten relativ zueinander in dem Abstandsraster so angeordnet sind, dass die Abstände zwischen den Informationsträgereinheiten mindestens einem 2-fachen einer wirksamen Antennenreichweite der Informationsträgereinheiten in Richtung der jeweils nächstliegenden Informationsträgereinheiten entsprechen.

Insbesondere wird dadurch auch beim Ansprechen der Informationsträgereinheiten mit dem Schreib-/Lesegerät eine Mehrfachauslesung mit mehren Informationsträgereinheiten und somit eine Fehlinterpretation der ausgelesenen Daten vermieden.

Noch besser ist es, wenn die Abstände mindestens einem 2,5-fachen der wirksamen Antennenreichweite der Informationsträgereinheiten in Richtung der nächstliegenden Informationsträgereinheit entsprechen.

Hinsichtlich der Ausbildung der Informationsträgereinheit selbst wurden bislang keine näheren Angaben gemacht.

So sieht eine vorteilhafte Ausführungsform vor, dass die Informationsträgereinheit eine Basis umfasst.

In diesem Fall ist vorgesehen, dass ein integrierter Schaltkreis der Informationsträgereinheit an der Basis angeordnet ist.

Ferner ist in diesem Fall zweckmäßigerweise vorgesehen, dass eine als Antenneneinheit wirkende elektrische Leitung an der Basis angeordnet ist.

Die Antenne kann dabei aus metallischen Leiterbahnen, oder durch einen auf die Basis aufgetragenen Lack, hergestellt sein. Bei einer anderen Ausführungsform ist die Antenne durch einen Druckvorgang auf die Basis aufgebracht.

Bei einem vorteilhaften Ausführungsbeispiel einer erfindungsgemäßen Informationsträgereinheit ist die Basis aus einem starren, biegesteifen Material gebildet, in welches beispielsweise die Antenne und der integrierte Schaltkreis eingebettet sind. Beispielsweise ist die Basis durch eine Einbettmasse gebildet, die die Antenneneinheit und den integrierten Schaltkreis umschließt und als scheibenförmiger, halblinsenförmiger oder linsenförmiger Körper ausgebildet ist.

Eine derartige Informationsträgereinheit lässt sich somit als starrer Körper an der jeweiligen Stelle einbauen, insbesondere formschlüssig einsetzen.

Bei einer derartigen Ausbildung der Basis ist vorzugsweise die Informationsträgereinheit so ausgebildet, dass das elektromagnetische Feld zur Kommunikation mit der Informationsträgereinheit im HF-Frequenzbereich liegt.

Alternativ dazu ist vorgesehen, dass die Basis aus einem biegbaren Material ist.

Ein derartiges biegbares Material könnte beispielsweise ein federnd biegbares Material sein.

Besonders günstig ist es jedoch zum Einbauen der Informationsträgereinheit mit der Basis, wenn das biegbare Material ein so genanntes biegeschlaffes Material ist.

Hinsichtlich des Aufbaus der Informationsträgereinheiten wurden bislang keine näheren Angaben gemacht.

Eine vorteilhafte Lösung sieht vor, dass die Informationsträgereinheit mindestens einen Speicher, beispielsweise für die auslesbare Information, aufweist.

Ein derartiger Speicher könnte in unterschiedlichster Art und Weise ausgebildet sein. Beispielsweise könnte der Speicher so ausgebildet sein, dass die in diesem gespeicherte Information durch das Schreib-/Lesegerät überschreibbar ist.

Eine besonders vorteilhafte Lösung sieht jedoch vor, dass der Speicher ein Speicherfeld aufweist, in welchem einmalig eingeschriebene Informationen schreibgeschützt gespeichert sind.

Ein derartiges Speicherfeld eignet sich dafür, beispielsweise einen Identifikationscode für die Informationsträgereinheit oder andere für diese Informationsträgereinheit spezifischen Daten zu speichern, die durch keinen der Nutzer mehr veränderbar sind.

Ein derartiges Speicherfeld eignet sich aber auch dafür, seitens des Herstellers Informationen zu speichern, die nicht überschrieben werden sollen. Beispielsweise sind dies Kabeldaten, Kabelspezifikationen oder auch Angaben zur Art und Einsetzbarkeit des Kabels.

Diese Daten können beispielsweise aber auch noch ergänzt werden, durch Daten, die Angaben über die Herstellung dieses speziellen Leitungssatzes umfassen oder Daten, die Messprotokolle aus einer Endprüfung des Leitungssatzes darstellen.

Darüber hinaus kann ein erfindungsgemäßer Speicher noch ferner dahingehend ausgebildet sein, dass dieser ein Speicherfeld aufweist, in welchem Informationen durch einen Zugangscode schreibgeschützt gespeichert sind.

Eine derartige schreibgeschützte Speicherung von Informationen kann beispielsweise Daten umfassen, die von einem Anwender speicherbar sind. Beispielsweise könnte ein Anwender in dem Speicherfeld nach Konfektionieren des Leitungssatzes Daten über die Konfektionierung des Leitungssatzes oder über die Gesamtlänge des Leitungsstrangs oder über die jeweiligen Längenabschnitte des Leitungsstrangs speichern, wobei dem Anwender hierzu seitens des Herstellers ein Zugangscode zur Verfügung gestellt wird, um diese Daten in dem Speicherfeld abzulegen.

Eine weitere vorteilhafte Ausführungsform sieht vor, dass der Speicher ein Speicherfeld aufweist, welches frei mit Informationen beschreibbar ist.

Ein derartiges Speicherfeld kann beispielsweise Informationen aufnehmen, die vom Anwender in der Leitungsaufnahmeeinheit abgelegt werden sollen, beispielsweise über die Art des Einbaus oder die Konfektionierung derselben.

Bei den vorstehend beschriebenen Lösungen könnte ein Ansprechen aller Informationsträgereinheiten vorgesehen sein. Insbesondere ist jedoch vorgesehen, dass jede der Informationsträgereinheiten einzeln ansprechbar ist.

Insbesondere bei Verwendung mehrerer Informationsträgereinheiten wäre es beispielsweise denkbar, dass mit einem Zugangscode alle Informationsträgereinheiten ansprechbar sind. Dies hat jedoch den Nachteil, dass damit die Informationsträgereinheiten nicht selektiv genutzt werden können, beispielsweise um bestimmten Abschnitten des Kabels unterschiedliche Informationen zuzuordnen.

Aus diesem Grund ist es günstig, wenn jede der Informationsträgereinheiten durch einen Zugangscode einzeln ansprechbar ist.

Im Zusammenhang mit der bisherigen Beschreibung der Informationsträgereinheiten wurde lediglich davon ausgegangen, dass diese Informationen tragen, die entweder vor oder während der Produktion des Leitungssatzes oder beim Einsatz des Leitungssatzes in den Informationsträgereinheiten durch externe Schreib-/Lesegeräte eingespeichert wurden.

Um mit den Informationsträgereinheiten Informationen weiterleiten zu können, ist zweckmäßigerweise bei einer vorteilhaften Ausführungsform vorgesehen, dass die Informationsträgereinheiten Informationen empfangen und nachfolgend wieder senden.

Besonders vorteilhaft ist es dabei, wenn die Informationsträgereinheiten die Information zwischenspeichern, so dass das Senden der Information zu einem günstigen Zeitpunkt erfolgen kann.

Eine weitere vorteilhafte Lösung sieht vor, dass die mindestens eine Informationsträgereinheit Messwerte eines zugeordneten Sensors erfasst, das heißt, dass die Informationsträgereinheit nicht nur externe Informationen speichert und dann wieder zur Verfügung stellt, sondern in der Lage ist, selbst Informationen des Leitungssatzes, das heißt physikalische Zustandsgrößen des Leitungssatzes, zu erfassen.

Beispielsweise ist vorgesehen, dass der Sensor mindestens eine der Zustandsgrößen wie physikalische Strahlung, Temperatur, Zug, Druck, Dehnung oder Feuchtigkeit erfasst.

Eine besonders vorteilhafte Lösung sieht vor, dass mit dem Sensor Scherbeanspruchungen im Leitungsstrang oder in der Leitungsaufnahmeeinheit erfassbar sind.

Hinsichtlich des Betriebs der Informationsträgereinheit und des Sensors seitens der Informationsträgereinheit wurden bislang keine näheren Angaben gemacht. So sieht eine vorteilhafte Lösung vor, dass die Informationsträgereinheit den Sensor im aktivierten Zustand ausliest.

Das heißt, dass die Informationsträgereinheit keine eigene Stromversorgung aufweist, sondern durch eine externe Energieversorgung aktiviert werden muss.

Eine Möglichkeit einer derartigen Aktivierung ist die, dass die Informationsträgereinheit durch ein Schreib-/Lesegerät aktivierbar ist.

Eine andere vorteilhafte Lösung sieht vor, dass die Informationsträgereinheit durch ein elektromagnetisches Feld eines durch den Leitungsstrang fließenden Stroms aktivierbar ist.

Ein derartiges elektromagnetisches Feld ist beispielsweise dadurch zu erreichen, dass durch den Leitungsstrang ein Strom zur Versorgung von Geräten fließt, der das elektromagnetische Feld aufbaut.

Es ist aber auch denkbar, in dem Leiterstrang eigens Leitungen vorzusehen, die ein elektromagnetisches Feld zur Energieversorgung der mindestens einen Informationsträgereinheit oder der Vielzahl von Informationsträgereinheiten erzeugen.

Hinsichtlich der Speicherung der Messwerte ist es günstig, wenn die Informationsträgereinheit in einem Speicherfeld des Speichers die Messwerte speichert.

Da bei einer langen Lebensdauer des Leitungsstrangs mit einer Vielzahl von Messwerten zu rechnen ist, die somit einen sehr großen Speicher zur Speicherung erfordern würden, ist zur Reduzierung der Datenmenge vorzugsweise vorgesehen, dass die Informationsträgereinheit in dem Speicherfeld einen Messwert nur dann speichert, wenn dieser einen Schwellwert übersteigt.

Dies kann beispielsweise so erfolgen, dass die Informationsträgereinheit ständig die Messwerte erfasst, dass der Informationsträgereinheit jedoch ein Schwellwert vorgegeben ist, ab welchem die Messwerte eingespeichert werden, so dass Normalzustände nicht gespeichert werden, sondern nur die Messwerte gespeichert werden, die einem durch den Schwellwert definierten Normalzustand nicht entsprechen.

Diese Messwerte werden dann im einfachsten Fall als bloße Messwerte, in etwas komplexeren Fällen als Messwerte mit Angabe der Zeit, zu der diese erfasst wurden, oder mit Angabe anderer Umstände, im Rahmen welcher diese Messwerte erfasst wurden, gespeichert.

Alternativ dazu sieht eine vorteilhafte Lösung vor, dass die Informationsträgereinheit in dem Speicherfeld nur Messwerte speichert, die außerhalb einer statistisch ermittelten Normalmesswertvertellung liegen.

Hinsichtlich der Bereiche, in welchen die Zustandsgrößen mittels des Sensors ermittelt werden, wurden bislang keine näheren Angaben gemacht.

Eine vorteilhafte Lösung sieht vor, dass der Sensor mindestens eine Zustandsgröße der Leitungsaufnahmeeinheit erfasst.

So sieht eine vorteilhafte Lösung vor, dass der Sensor mindestens eine Zustandsgröße des Innenkörpers des Leitungsstrangs erfasst.

Eine andere Lösung sieht vor, dass der Sensor mindestens eine Zustandsgröße des Mantels des Leitungsstrangs erfasst.

Eine weitere Lösung sieht vor, dass der Sensor mindestens eine Zustandsgröße zwischen dem Innenkörper und dem Mantel erfasst.

Bei einer weiteren Ausführungsform ist vorgesehen, dass sowohl ein Sensor für Zustandsgrößen des Innenkörpers als auch einen Sensor für Zustandsgrößen des Mantels vorgesehen ist.

Hinsichtlich der Art und Ausbildung des Sensors wurden bislang keine näheren Angaben gemacht.

So sieht ein vorteilhaftes Ausführungsbeispiel vor, dass der Sensor ein auf die zu erfassende Zustandsgröße irreversibel reagierender Sensor ist.

Ein derartiger Sensor hat den Vorteil, dass dieser dann, wenn die Zustandsgröße auftritt, irreversibel reagiert, so dass es nicht notwendig ist, dass der Sensor und insbesondere die Informationsträgereinheit zum Zeitpunkt des Auftretens der zu erfassenden Zustandsgröße oder des Auftretens der Abweichung der zu erfassenden Zustandsgröße aktiv ist. Vielmehr ist der Sensor zu allen späteren Zeitpunkten in der Lage, einen Messwert zu generieren, der der Zustandsgröße entspricht, die zu irgendeinem Zeitpunkt in der Vergangenheit erreicht wurde.

Alternativ dazu ist vorgesehen, dass der Sensor im Hinblick auf die zu erfassende Zustandsgröße ein reversibel reagierender Sensor ist. In diesem Fall ist es erforderlich, bei Auftreten der zu erfassenden Zustandsgröße oder der Veränderung der zu erfassenden Zustandsgröße den Sensor zu aktivieren, um den dieser Zustandsgröße entsprechenden Messwert erfassen zu können.

Hinsichtlich der Kommunikation der Informationsträgereinheit über elektromagnetische Felder wurden bislang keine näheren Angaben gemacht.

So sieht eine vorteilhafte Lösung vor, dass die mindestens eine Informationsträgereinheit mit einem Schreib-/Lesegerät kommuniziert.

Ein derartiges Schreib-/Lesegerät kann beispielsweise ein mobiles Schreib-/Lesegerät sein, das von einem Benutzer jeweils in die Nähe der Leitungsaufnahmeeinheit gebracht wird, um mit der Informationsträgereinheit in der Leitungsaufnahmeeinheit oder gegebenenfalls auch mit einer Informationsträgereinheit in dem Leitungsstrang direkt zu kommunizieren.

Diese Lösung macht es jedoch notwendig, dass das mobile Schreib-/Lesegerät stets in eine geeignete Position relativ zur Informationsträgereinheit gebracht wird.

Eine andere vorteilhafte Lösung sieht daher vor, dass das Schreib-/Lesegerät zur Kommunikation mit der Informationsträgereinheit an einer dem Leitungsstrang zugeordneten Einrichtung stationär angeordnet ist.

Ein derartiges stationäres Schreib-/Lesegerät hat den Vorteil, dass dieses nicht jeweils in eine geeignete Position relativ zur Informationsträgereinheit gebracht werden muss, sondern ständig in der Position steht und somit lediglich aktiviert werden muss, um mit der Informationsträgereinheit zu kommunizieren.

Insbesondere ist bei einer vorteilhaften Lösung vorgesehen, dass das Schreib-/Lesegerät zur Kommunikation mit der Informationsträgereinheit einer mit der Leitungsaufnahmeeinheit zu verbindenden Einheit stationär zugeordnet ist.

Durch die stationäre Zuordnung des Schreib-/Lesegeräts zu der mit der Leitungsaufnahmeeinheit zu verbindenden Einrichtung können die geometrischen Gegebenheiten zur Kommunikation mit der Informationsträgereinheit in einfacher Weise so gewählt werden, dass bei einer Aktivierung des Schreib-/Lesegeräts stets eine Kommunikation mit der Informationsträgereinheit möglich ist.

Eine im Anwendungsfall besonders zweckmäßige Lösung sieht vor, dass die Leitungsaufnahmeeinheit als Steckverbinderelement ausgebildet ist und dass das Schreib-/Lesegerät zur Kommunikation mit der Informationsträgereinheit einem Gegensteckverbinderelement zugeordnet ist.

Dabei könnte die Zuordnung zu dem Gegensteckverbinderelement räumlich ausreichen.

Eine sichere Kommunikation zwischen dem schreib-/Lesegerät, insbesondere einer Antenneneinheit desselben, und der Informationsträgereinheit lässt sich dann realisieren, wenn eine Antenneneinheit des Schreib-/Lesegeräts einem Basisteil des Gegensteckverbindereiements zugeordnet ist, so dass bei einer Verbindung des Steckverbinderelements und des Gegensteckverbinderelements die räumliche Lage zwischen der Informationsträgereinheit im Steckverbinderelement und der Antenneneinheit im Gegensteckverbinderelement mit der ausreichenden Genauigkeit definiert ist und somit die für eine einwandfreie Kommunikation erforderliche räumliche Zuordnung zwischen der Antenneneinheit und der Informationsträgereinheit stets gegeben ist.

Besonders günstig ist es dabei, wenn die Antenneneinheit an dem Basisteil angeordnet ist. Noch vorteilhafter ist es, wenn die Antenneneinheit des Schreib-/Lesegeräts in dem Basisteil angeordnet ist, das heißt, dass die Antenneneinheit entweder in einer Aufnahme des Basisteils angeordnet ist oder beispielsweise auch in das Basisteil integriert, das heißt, in dieses eingesetzt oder eingeformt ist.

Hinsichtlich der Funktion des Schreib-/Lesegerätes ist grundsätzlich davon auszugehen, dass das Schreib-/Lesegerät in der Lage ist, mit der Informationsträgereinheit Daten auszutauschen.

Es ist jedoch mindestens erforderlich, dass das Schreib-/Lesegerät Daten aus mindestens einer Informationsträgereinheit ausliest, wobei diese Daten alle vorstehend beispielhaft beschriebenen Informationen umfassen können.

Das Schreib-/Lesegerät kann nun so ausgebildet sein, dass es die ausgelesenen Daten an weitere Geräte weiterleitet.

Alternativ oder ergänzend kann jedoch das Schreib-/Lesegerät in vorteilhafter Weise so ausgebildet sein, dass es die Daten auswertet und Steuersignale generiert.

Dabei kann eine Vielzahl unterschiedlichster Steuerdaten ausgewertet und Steuersignale generiert werden.

Beispielsweise ist es denkbar, vorzusehen, dass das Schreib-/Lesegerät die Richtigkeit der Zuordnung der Leitungsaufnahmeeinheit zu der Einrichtung überprüft.

Eine andere vorteilhafte Lösung sieht vor, dass das Schreib-/Lesegerät die Richtigkeit der Zuordnung des Leitungssatzes zu der Einrichtung überprüft.

Eine andere vorteilhafte Ausführungsform sieht vor, dass das Schreib-/Lesegerät die Richtigkeit oder Unrichtigkeit der Zuordnung überprüft und anzeigt, das heißt ein Steuersignal zur Anzeige generiert.

Dabei kann das Schreib-/Lesegerät eine Anzeigeeinheit ansteuern. Es ist aber auch denkbar, das Schreib-/Lesegerät so auszubilden, dass dieses mit einer Anzeige versehen ist.

Eine derartige Anzeige kann beispielsweise eine optische oder auch eine akustische Anzeige sein, die dazu eingesetzt werden kann, im Fall einer Unrichtigkeit einer Zuordnung diese optisch und/oder akustisch einem Benutzer mitzuteilen.

Sofern auch in dem Leitungsstrang Informationsträgereinheiten vorgesehen sind, sieht ein weiteres vorteilhaftes Ausführungsbeispiel vor, dass das Schreib-/Lesegerät mit mindestens einer Informationsträgereinheit in dem Leitungsstrang kommuniziert, wobei vorzugsweise die Kommunikation mit der Informationsträgereinheit in dem Leitungsstrang kontaktierungsfrei, das heißt über elektromagnetische Felder erfolgt.

Bei dieser Lösung ist es denkbar, dass das Schreib-/Lesegerät unmittelbar mit einer Informationsträgereinheit im Leitungsstrang über das elektromagnetische Feld kommuniziert, wenn das Schreib-/Lesegerät geometrisch in ausreichend geringem Abstand von der Informationsträgereinheit im Leitungsstrang angeordnet ist.

Besonders vorteilhaft ist es jedoch, wenn das Schreib-/Lesegerät über die Informationsträgereinheit in der Leitungsaufnahmeeinheit mit der mindestens einen Informationsträgereinheit im Leitungsstrang kommuniziert, so dass dadurch die Möglichkeit gegeben ist, mit dem Schreib-/Lesegerät zunächst eine Kommunikation mit der Informationsträgereinheit in der Leitungsaufnahmeeinheit aufzubauen und dann über die Informationsträgereinheit in der Leitungsaufnahmeeinheit mit den weiteren Informationsträgereinheiten, insbesondere den im Leitungsstrang zu kommunizieren.

Eine besonders günstige Lösung sieht vor, dass die Informationsträgereinheiten, das heißt, insbesondere die mehreren Informationsträgereinheiten im Leitungsstrang und beispielsweise auch noch die Informationsträgereinheit in der Leitungsaufnahmeeinheit, ein Informationsträgernetzwerk bilden, in welchem diese Informationsträgereinheiten untereinander kommunizieren.

Vorzugsweise erfolgt dabei eine Kommunikation der Informationsträgereinheiten untereinander so, dass die jeweilige Informationsträgereinheit mit der jeweiligen nächstliegenden Informationsträgereinheit kommuniziert und diese dann wieder mit der dieser nächstliegenden Informationsträgereinheit kommuniziert.

Eine besonders vorteilhafte Lösung sieht dabei vor, dass das Informationsträgernetzwerk über das Schreib-/Lesegerät zugänglich ist, das heißt, dass das Schreib-/Lesegerät nicht nur dazu dient, Daten aus den Informationsträgereinheiten auszulesen, sondern einen Zugang zu dem Informationsträgernetzwerk schafft.

Zweckmäßigerweise ist dabei vorgesehen, dass das Informationsträgernetzwerk über die mit dem Schreib-/Lesegerät kommunizierende Informationsträgereinheit in der Leitungsaufnahmeeinheit zugänglich ist.

Hinsichtlich der einzelnen Ausbildungen der Leitungsaufnahmeeinheiten wurden bislang keine näheren Angaben gemacht.

So sieht eine vorteilhafte Lösung vor, dass die Leitungsaufnahmeeinheit als Leitungsverschraubung, insbesondere als Kabelverschraubung, ausgebildet ist.

Eine derartige Leitungsverschraubung oder Kabelverschraubung kann dabei zur Montage an einem Gerätegehäuse vorgesehen sein oder Teil eines Gehäuses eines Steckverbinders sein.

Eine andere vorteilhafte Lösung sieht vor, dass die Leitungsaufnahmeeinheit als Steckverbinderelement ausgebildet ist.

Insbesondere ist bei einem derartigen Steckverbinderelement vorgesehen, dass das Steckverbinderelement einen Kontakteinsatz zum Herstellen einer Verbindung mit einem korrespondierenden Kontakteinsatz eines korrespondierenden Steckverbinderelements aufweist.

Vorzugsweise ist dabei der Kontakteinsatz mit Steckkontakten versehen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein schematisches Blockschaltbild eines ersten Ausführungsbeispiels einer erfindungsgemäßen Informationsträgereinheit;
- Fig. 2: eine Darstellung der Realisierung des ersten Ausführungsbeispiels der erfindungsgemäßen Informationsträgereinheit;
- Fig. 3: eine Darstellung der Realisierung eines zweiten Ausführungsbeispiels der erfindungsgemäßen Informationsträgereinheit;
- Fig. 4: eine Darstellung der Realisierung eines dritten Ausführungsbeispiels der erfindungsgemäßen Informationsträgereinheit;
- Fig. 5: ein schematisches Blockschaltbild eines vierten Ausführungsbeispiels einer erfindungsgemäßen Informationsträgereinheit;
- Fig. 6: eine Darstellung der Realisierung des vierten Ausführungsbeispiels der erfindungsgemäßen Informationsträgereinheit;
- Fig. 7: ein schematisches Blockschaltbild eines fünften Ausführungsbeispiels der erfindungsgemäßen Informationsträgereinheit;
- Fig. 8: eine Darstellung der Realisierung des fünften Ausführungsbeispiels der erfindungsgemäßen Informationsträgereinheit;
- Fig. 9: eine Darstellung der Realisierung eines sechsten Ausführungsbeispiels der erfindungsgemäßen Informationsträgereinheit;
- Fig. 10: eine Ansicht des sechsten Ausführungsbeispiels der erfindungsgemäßen Informationsträgereinheit in Richtung des Pfeils A in Fig. 9;
- Fig. 11: eine perspektivische Darstellung eines ersten Ausführungsbeispiels eines erfindungsgemäßen Leitungssatzes;
- Fig. 12: einen Schnitt durch ein erstes Ausführungsbeispiel eines Steckverbinderelements für das erste Ausführungsbeispiel eines erfindungsgemäßen Leitungssatzes;
- Fig. 13: einen vergrößerten Schnitt im Bereich B in Fig. 12;
- Fig. 14: einen Schnitt durch ein zweites Ausführungsbeispiel eines Steckverbinderelements für das erste Ausführungsbeispiel eines erfindungsgemäßen Leitungssatzes;
- Fig. 15: einen Schnitt durch ein drittes Ausführungsbeispiel eines Steckverbinderelements für das erste Ausführungsbeispiel eines erfindungsgemäßen Leitungssatzes;
- Fig. 16: einen Schnitt durch ein viertes Ausführungsbeispiel eines Steckverbinderelements für das erste Ausführungsbeispiel eines erfindungsgemäßen Leitungssatzes;
- Fig. 17: einen Schnitt durch ein fünftes Ausführungsbeispiel eines Steckverbinderelements für das erste Ausführungsbeispiel eines erfindungsgemäßen Leitungssatzes;
- Fig. 18: einen Schnitt durch ein sechstes Ausführungsbeispiel eines Steckverbinderelements für das erste Ausführungsbeispiel eines erfindungsgemäßen Leitungssatzes;
- Fig. 19: einen Schnitt durch ein erstes Ausführungsbeispiel einer Kabelverschraubung für das erste Ausführungsbeispiel eines erfindungsgemäßen Leitungssatzes;
- Fig. 20: einen Schnitt durch ein zweites Ausführungsbeispiel einer Kabelverschraubung für das erste Ausführungsbeispiel eines erfindungsgemäßen Leitungssatzes;
- Fig. 21: einen Schnitt durch ein drittes Ausführungsbeispiel einer Kabelverschraubung für das erste Ausführungsbeispiel eines erfindungsgemäßen Leitungssatzes;
- Fig. 22: einen Schnitt durch ein viertes Ausführungsbeispiel einer Kabelverschraubung für das erste Ausführungsbeispiel eines erfindungsgemäßen Leitungssatzes;
- Fig. 23: einen Schnitt durch ein fünftes Ausführungsbeispiel einer Kabelverschraubung für das erste Ausführungsbeispiel eines erfindungsgemäßen Leitungssatzes;
- Fig. 24: einen Schnitt durch ein sechstes Ausführungsbeispiel einer Kabelverschraubung für das erste Ausführungsbeispiel eines erfindungsgemäßen Leitungssatzes;
- Fig. 25: eine perspektivische Darstellung ähnlich Fig. 11 eines zweiten Ausführungsbeispiels eines erfindungsgemäßen Leitungssatzes;
- Fig. 26: einen Schnitt durch ein Steckverbinderelement für das zweite Ausführungsbeispiel des erfindungsgemäßen Leitungssatzes;
- Fig. 27: einen Schnitt durch ein Stück eines Leitungsstrangs des zweiten Ausführungsbeispiels des erfindungsgemäßen Leitungssatzes;
- Fig. 28: einen Schnitt durch ein erstes Ausführungsbeispiel eines Steckverbinderelements eines dritten Ausführungsbeispiels eines erfindungsgemäßen Leitungssatzes;
- Fig. 29: einen Schnitt durch ein Stück des Leitungsstrangs beim dritten Ausführungsbeispiel eines erfindungsgemäßen Leitungssatzes;
- Fig. 30: einen vergrößerten Ausschnitt eines Schnitts gemäß Fig. 29 durch das dritte Ausführungsbeispiel des erfindungsgemäßen Leitungssatzes;
- Fig. 31: einen Schnitt ähnlich Fig. 28 durch ein zweites Ausführungsbeispiel eines Steckverbinderelements des dritten Ausführungsbeispiels eines erfindungsgemäßen Leitungssatzes;
- Fig. 32: einen Schnitt ähnlich Fig. 29 durch ein viertes Ausführungsbeispiel eines erfindungsgemäßen Leitungssatzes;
- Fig. 33: einen Schnitt durch ein Ausführungsbeispiel eines erfindungsgemäßen Gegensteckverbinderelements;
- Fig. 34: eine Ansicht eines Gehäuses mit mehreren Gegensteckverbinderelementen gemäß dem Ausführungsbeispiel in Fig. 33 und
- Fig. 35: einen Schnitt ähnlich Fig. 33 durch ein weiteres Ausführungsbeispiel eines erfindungsgemäßen Steckverbinderelements mit einem Gegensteckverbinderelement.

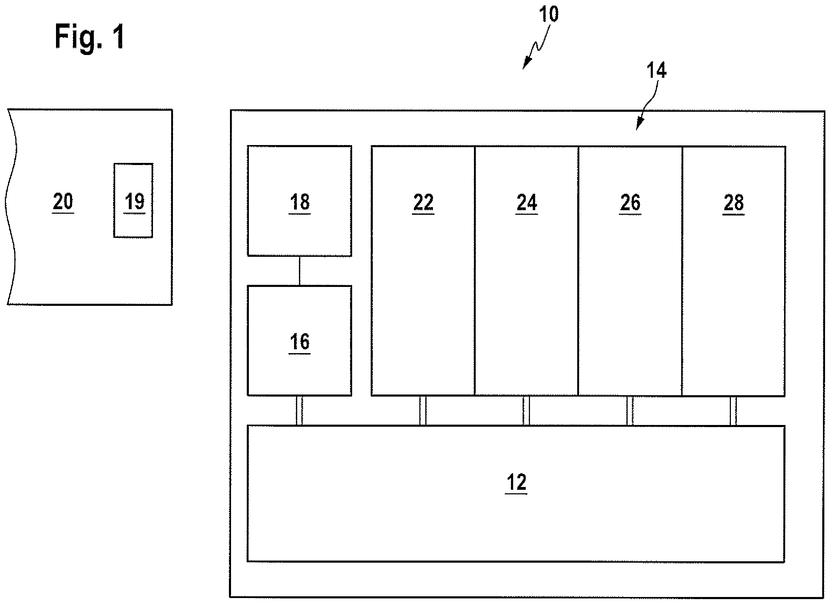

Ein erstes Ausführungsbeispiel einer erfindungsgemäß einzusetzenden Informationsträgereinheit 10, dargestellt in Fig. 1, umfasst einen Prozessor 12, mit welchem ein als Ganzes mit 14 bezeichneter Speicher gekoppelt ist, wobei der Speicher vorzugsweise als EEPROM ausgebildet ist.

Ferner ist mit dem Prozessor 12 ein Analogteil 16 gekoppelt, welches mit einer Antenneneinheit 18 zusammenwirkt.

Das Analogteil 16 ist dabei in der Lage, bei elektromagnetischer Ankopplung der Antenneneinheit 18 an eine Antenneneinheit 19 eines als Ganzes mit 20 bezeichnetes stationäres oder mobiles Schreib-/Lesegeräts einerseits die für den Betrieb des Prozessors 12 und des Speichers 14 sowie des Analogteils 16 selbst notwendige elektrische Betriebsspannung bei dem erforderlichen Strom zu erzeugen und andererseits die durch elektromagnetische Feldkopplung bei einer Trägerfrequenz übertragenen Informationssignale dem Prozessor 12 zur Verfügung zu stellen oder vom Prozessor 12 erzeugte Informationssignale über die Antenneneinheit 18 dem Schreib-/Lesegerät 20 zu übermitteln.

Dabei sind die unterschiedlichsten Trägerfrequenzbereiche möglich.

In einem LF-Frequenzbereich von ungefähr 125 bis ungefähr 135 kHz wirkt die Antenneneinheit 18 im Wesentlichen als zweite Spule eines Transformators, gebildet durch die Antenneneinheit 18 und die Antenneneinheit 19 des Schreib-/Lesegeräts 20, wobei die Energie- und Informationsübertragung im Wesentlichen über das Magnetfeld erfolgt.

In diesem Frequenzbereich ist die Reichweite zwischen der Antenneneinheit 19 und der Antenneneinheit 18 gering, das heißt, dass beispielsweise das mobile Schreibe/Lesegerät 20 mit der Antenneneinheit 19 sehr nahe, bis auf weniger als 10 cm, an die Antenneneinheit 18 herangeführt werden muss.

In einem HF-Frequenzbereich zwischen ungefähr 13 und ungefähr 14 MHz wirkt die Antenneneinheit 18 ebenfalls im Wesentlichen als Spule, wobei nach wie vor eine gute Energieübertragung bei ausreichend großer Reichweite in der Wechselwirkung zwischen der Antenneneinheit 18 und der Antenneneinheit 19 des Schreib-/Lesegeräts 20 möglich ist, wobei der Abstand beispielsweise weniger als 20 cm beträgt.

Im UHF-Frequenzbereich ist die Antenneneinheit 18 als Dipolantenne ausgebildet, so dass bei nicht über das Schreib-/Lesegerät 20 erfolgender Stromversorgung der Informationsträgereinheit 10 eine große Reichweite bei der Kommunikation mit der Antenneneinheit 19 des Schreib-/Lesegeräts 20 von beispielsweise bis zu 3 m realisierbar ist, wobei die Wechselwirkung zwischen dem Schreib-/Lesegerät 20 und der Antenneneinheit 18 über elektromagnetische Felder erfolgt. Die Trägerfrequenzen liegen bei ungefähr 850 bis ungefähr 950 MHz oder bei ungefähr 2 bis ungefähr 3 GHz oder bei ungefähr 5 bis ungefähr 6 GHz. Bei einer Stromversorgung durch das beispielsweise mobile Schreibe/Lesegerät 20 beträgt die Reichweite der Kommunikation bis zu 50 cm.

Je nach Frequenzbereich sind daher auch die Antenneneinheiten 18 unterschiedlich ausgebildet. Im LF-Frequenzbereich ist die Antenneneinheit 18 als kompakte, beispielsweise gewickelte Spule ausgebildet mit einer Ausdehnung, die auch geringer sein kann als ein Quadratzentimeter.

Im HF-Frequenzbereich ist die Antenneneinheit 18 ebenfalls als flächenhafte Spule ausgebildet, die auch eine größere Ausdehnung in der Dimension von mehreren Quadratzentimetern haben kann.

Im UHF-Frequenzbereich ist die Antenneneinheit 18 als Dipolantenne unterschiedlichster Ausprägung ausgebildet.

Der mit dem Prozessor 12 zusammenwirkende Speicher 14 ist vorzugsweise in mehrere Speicherfelder 22 bis 28 aufgeteilt, die in unterschiedlicher Art und Weise beschreibbar sind.

Beispielsweise ist das Speicherfeld 22 als herstellerseitig beschreibbares Speicherfeld vorgesehen und trägt beispielsweise einen Identifikationscode für die Informationsträgereinheit 10. Dieser Identifikationscode wird im Speicherfeld 22 herstellerseitig eingeschrieben, und gleichzeitig wird das Speicherfeld 22 mit einer Schreibsperre versehen.

Das Speicherfeld 24 ist beispielsweise mit einer seitens des Herstellers eines Leitungssatzes aktivierbaren Schreibsperre versehbar, so dass der Hersteller die Möglichkeit hat, das Speicherfeld 24 zu beschreiben und durch eine Schreibsperre die Information im Speicherfeld 24 zu sichern. Damit hat der Prozessor 12 die Möglichkeit, die im Speicherfeld 24 vorhandenen Informationen auszulesen und auszugeben, die Informationen im Speicherfeld 24 können jedoch nicht mehr durch Dritte überschrieben werden.

Beispielsweise sind die im Speicherfeld 24 gespeicherten Informationen Informationen über Art, Typ des Kabels und/oder technische Spezifikationen des Leitungssatzes.

Im Speicherfeld 26 werden beispielsweise vom Käufer des Leitungssatzes Informationen gespeichert und mit einem Schreibschutz versehen. Hier besteht die Möglichkeit, dass der Käufer und Anwender des Leitungssatzes Informationen über den Einbau und Einsatzmöglichkeiten des Leitungssatzes speichert und durch die Schreibsperre sichert.

Im Speicherfeld 28 sind Informationen frei einschreibbar und frei auslesbar, so dass dieses Speicherfeld während des Einsatzes der Informationsträgereinheit im Zusammenhang mit dem Leitungssatz zum Speichern und Auslesen von Informationen benutzt werden kann.

Das in Fig. 1 als Blockschaltbild dargestellte erste Ausführungsbeispiel der Informationsträgereinheit 10 ist eine so genannte passive Informationsträgereinheit und benötigt somit keinen Energiespeicher, insbesondere keinen Akkumulator oder keine Batterie, um temporär mit dem Schreib-/Lesegerät 20 in Wechselwirkung treten und Informationen austauschen zu können.

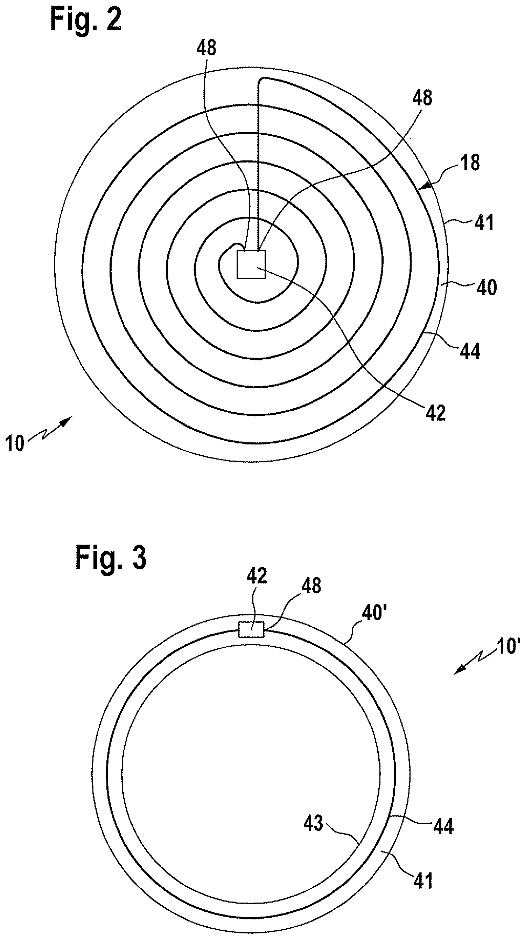

Eine Realisierung des ersten Ausführungsbeispiels der erfindungsgemäßen Informationsträgereinheit 10, dargestellt in Figur 2, umfasst eine Basis 40, auf welcher ein integrierter Schaltkreis 42 angeordnet ist, der den Prozessor 12, den Speicher 14 und den Analogteil 16 aufweist, sowie Leiterbahnen 44, auf der Basis 40, welche die Antenneneinheit 18 bilden. Die Leiterbahnen 44 können dabei auf der Basis 40 mittels beliebiger formselektiver Beschichtungsvorgänge aufgebracht werden, beispielsweise in Form von Aufdrucken eines leitfähigen Lacks oder einer leitfähigen Paste oder geätzten Metallstrukturen oder auch in Form einer Drahtschleife.

Die Basis 40 ist beispielsweise aus einem biegbaren Material, beispielsweise einem Kunststoffband, hergestellt, auf welchem einerseits die Leiterbahn 44 durch Beschichtung einfach und dauerhaft aufbringbar ist und andererseits auch der integrierte Schaltkreis 42 einfach fixierbar ist, insbesondere so, dass eine dauerhafte elektrische Verbindung zwischen äußeren Anschlussstellen 48 des integrierten Schaltkreises 42 und den Leiterbahnen 44 realisierbar ist.

Sofern die Basis 40 als Flachmaterial ausgebildet ist, ist es von Vorteil, wenn diese mit für deren Umgebung stumpf wirkenden Kantenbereichen 41 ausgebildet ist, um Beschädigungen der Umgebung der Basis 40 zu vermeiden. Dies bedeutet, bei aus einem dünnen Flachmaterial ausgebildeter Basis 40, dass diese zum Beispiel abgerundete Eckbereiche aufweist, und wenn möglich auch stumpf wirkende, zum Beispiel entgratete, Kanten aufweist.

Bei einem zweiten Ausführungsbeispiel 10' einer erfindungsgemäßen Informationsträgereinheit in Fig. 3 ist die Basis 40' aus einem ringförmigen Flachmaterialstück gebildet, auf dem der integrierte Schaltkreis 42 angeordnet ist und auf welchem die Leiterbahn 44 als einfache oder mehrfache Spulenwindung verläuft.

Damit lässt sich das zweite Ausführungsbeispiel 10' bei Anwendungen einsetzen, bei welchen ein Element durch einen mittigen Durchbruch 43 des ringförmigen Flachmaterials hindurchgeführt werden soll.

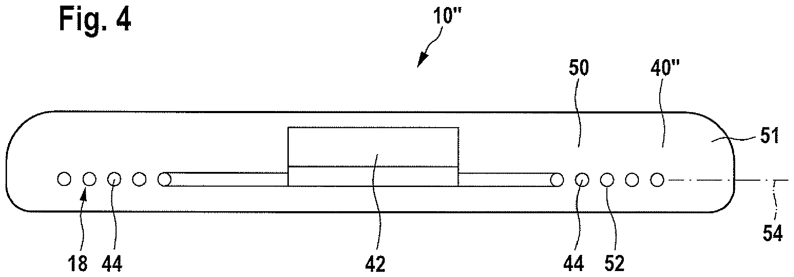

Bei einem dritten Ausführungsbeispiel, dargestellt in Figur 4, ist die Informationsträgereinheit 10" als einpassbar scheibenförmiger starrer Körper ausgebildet.

Die Basis 40" wird dabei gebildet durch eine einen Einbettkörper 50 bildende Einbettmasse, beispielsweise aus Harz oder Kunststoffmaterial, in welcher der integrierte Schaltkreis 42 und die Leiterbahnen 44, welche die Antenneneinheit 18 bilden, eingebettet sind, wobei die Leiterbahnen 44 beispielsweise ringförmige Spulenwindungen 52 bilden, die in einer Ebene 54 liegen und vollständig in dem Einbettkörper 50 eingebettet sind.

Der Einbettkörper 50 ist mit für die Umgebung stumpf wirkenden Kantenbereichen 51 versehen, die aufgrund ihrer Abrundung unter Bildung einer linsenähnlichen Querschnittsform keine Beschädigung hervorrufen können.

Dabei kann der Einbettkörper 50 eine scheibenähnliche Form mit gerundeten Kantenbereichen 51 eine linsenähnliche oder halblinsenähnliche Form aufweisen.

Bei diesem Ausführungsbeispiel ist beispielsweise die Antenneneinheit 18 für den LF- oder HF-Frequenzbereich vorgesehen, in welchem die Antenneneinheit 18 ähnlich einer zweiten Spule eines Transformators arbeitet.

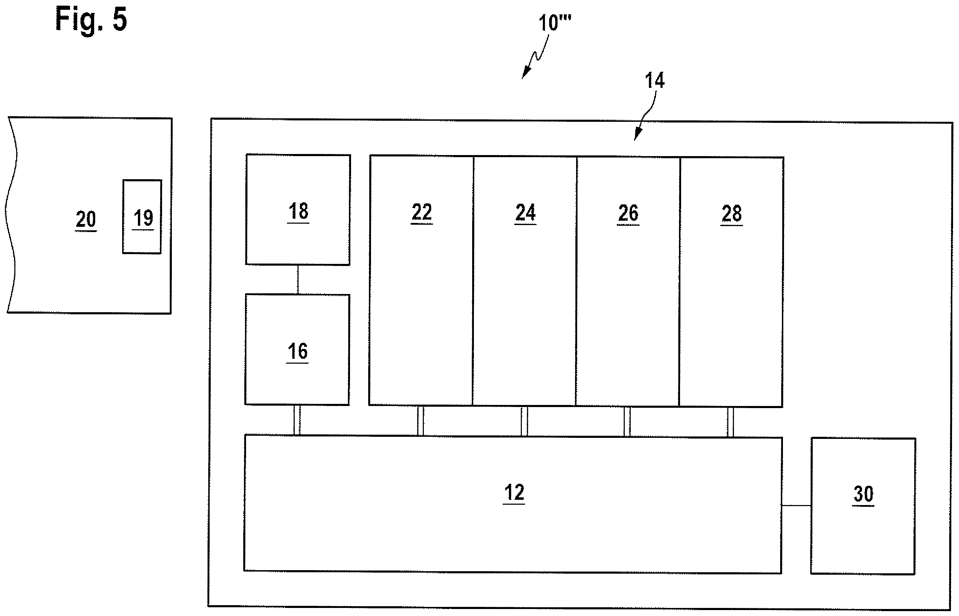

Bei einem vierten Ausführungsbeispiel einer erfindungsgemäßen Informationsträgereinheit 10"', dargestellt in Fig. 5, sind diejenigen Elemente, die mit denen des ersten Ausführungsbeispiels identisch sind, mit denselben Bezugszeichen versehen, so dass hinsichtlich der Beschreibung derselben vollinhaltlich auf das erste Ausführungsbeispiel Bezug genommen werden kann.

Im Gegensatz zum ersten, zweiten und dritten Ausführungsbeispiel ist beim vierten Ausführungsbeispiel 10"' dem Prozessor 12 noch ein Sensor 30 zugeordnet, mit welchem der Prozessor 12 in der Lage ist, physikalische Größen, wie beispielsweise Strahlung, Temperatur, Druck, Zug, Dehnung oder Feuchtigkeit, zu erfassen und beispielsweise entsprechende Werte in dem Speicherfeld 28 abzuspeichern.

Der Sensor 30 kann dabei je nach Einsatzfeld ausgebildet sein.

Beispielsweise ist es denkbar, den Sensor 30 zur Messung eines Drucks als druckempfindliche Schicht auszubilden, wobei die Druckempfindlichkeit beispielsweise über eine Widerstandsmessung oder bei einer mehrlagigen Schicht eine kapazitive Messung erfolgen kann.

Alternativ dazu ist es beispielsweise zur Ausbildung des Sensors als Temperatursensor denkbar, den Sensor als mit der Temperatur variablen Widerstand auszubilden, so dass durch eine Widerstandsmessung eine Temperaturmessung möglich ist oder durch eine temperaturempfindliche Elektronikschaltung.

Bei der Ausbildung des Sensors als Zug- oder Dehnungssensor ist der Sensor beispielsweise als Dehnungsmessstreifen ausgebildet, der je nach Dehnung seinen elektrischen Widerstand ändert. Zur Erhöhung der Empfindlichkeit und zur Kompensation von Störgrößen kann auch eine Messbrücke eingesetzt werden.

Sollte jedoch der Sensor als irreversibel auf eine bestimmte Dehnung oder auf einen bestimmten Zug reagierender Sensor ausgebildet sein, so ist ebenfalls möglich, den Sensor als eine elektrische Verbindung lösender Sensor auszubilden, beispielsweise als Draht oder Leiterbahn, bei der die elektrische Verbindung ab einem bestimmten Zug oder einer bestimmten Dehnung durch Bruch an einer Sollbruchstelle oder Rissbildung unterbricht oder von einem niedrigen zu einem hohen endlichen Widerstand übergeht.

Die Stauchungsmessung oder die Dehnungsmessung ließe sich aber auch gegebenenfalls durch eine kapazitive Messung realisieren.

Im Fall eines Feuchtigkeitssensors ist der Sensor vorzugsweise als mehrlagige Schichtstruktur ausgebildet, die ihren elektrischen Widerstand oder ihre Kapazität je nach Feuchtigkeit ändert.

Im Übrigen arbeitet das vierte Ausführungsbeispiel gemäß Fig. 5 in ähnlicher Weise wie das erste Ausführungsbeispiel,

Der Sensor 30 ist beispielsweise dann aktiv, wenn die Informationsträgereinheit 10"' durch das Schreib-/Lesegerät 20 aktiviert ist, so dass genügend Leistung zur Verfügung steht, um auch den Sensor 30 zu betreiben.

Während der Aktivierung der Informationsträgereinheit 10"' ist somit der Sensor 30 in der Lage, Messwerte dem Prozessor 12 zu übermitteln, welcher diese Messwerte dann beispielsweise im Speicherfeld 28 speichert und dann, wenn diese vom Schreib-/Lesegerät 20 angefordert werden, ausliest.

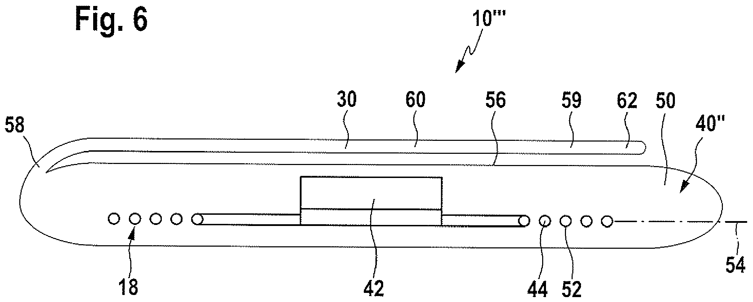

Eine Realisierung des vierten Ausführungsbeispiels der erfindungsgemäßen Informationsträgereinheit 10"', dargestellt in Figur 6, ist, wie beim dritten Ausführungsbeispiel gemäß Fig. 4, in die Basis 40" der integrierte Schaltkreis 42 eingebettet, der den Prozessor 12, den Speicher 14 und den Analogteil 16 aufweist, sowie Leiterbahnen 44 eingebettet, welche die Antenneneinheit 18 bilden.

Außerdem ist auf einer der Spule 52 gegenüberliegenden Seite 56 des Einbettkörpers 50 der Sensor 30 in Form einer auf einer Seite 58 am Einbettkörper 50 gehaltenen und sich im Übrigen frei von diesem weg erstreckenden Sensorfahne 59 angeordnet, die bei diesem Ausführungsbeispiel beispielsweise einen Dehnungsmessstreifen 60 umfasst, der mit einer der Seite 58 gegenüberliegenden Seite 62 fest mit einem relativ zum Einbettkörper 50 bewegbaren Element eines Leitungssatzes verbindbar ist, und die Möglichkeit eröffnet, Zugkräfte zu erfassen.

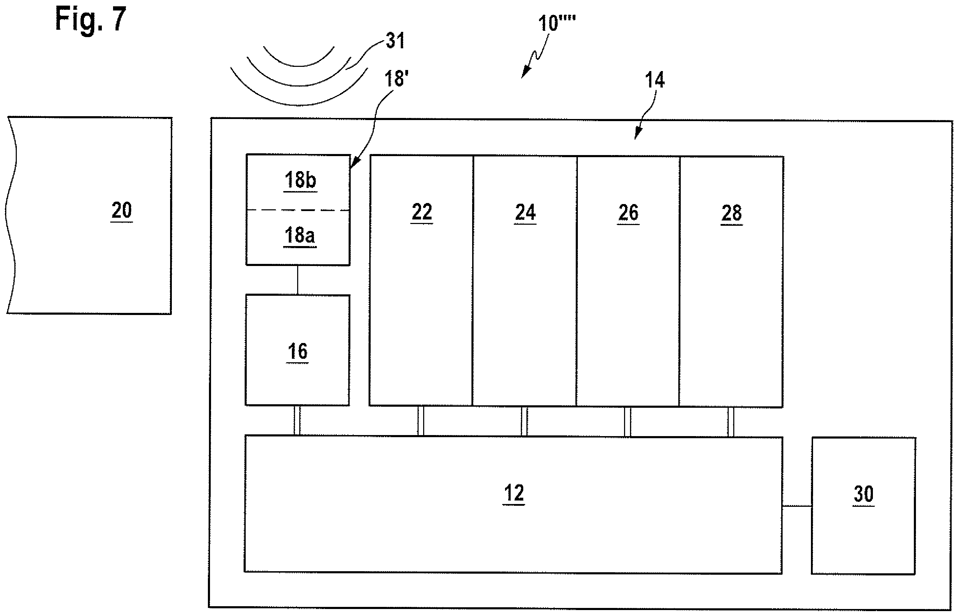

Im Gegensatz zu den voranstehenden Ausführungsbeispielen ist bei einem fünften Ausführungsbeispiel einer erfindungsgemäßen Informationsträgereinheit 10"", dargestellt in Fig. 7, dem Analogteil 16 eine Antenneneinheit 18' zugeordnet, die zweigeteilt ist, nämlich beispielsweise ein Antennenteil 18a aufweist, welches in gewohnter Weise mit der Antenneneinheit 19 des Schreib-/Lesegeräts 20 kommuniziert, und ein Antennenteil 18b aufweist, welches in der Lage ist, an ein magnetisches Wechselfeld 31 anzukoppeln und diesem Energie zu entziehen, um mit dieser aus dem magnetischen Wechselfeld 31 entzogenen Energie die Informationsträgereinheit 10 unabhängig vom, unter Umständen weit entfernten, Schreib-/Lesegerät 20 zu betreiben.

Beispielsweise kann das elektromagnetische Wechselfeld 31 durch das Streufeld einer Datenleitung, einer Steuerleitung, einer gepulsten Stromleitung oder einer Wechselstromleitung erzeugt werden, welche beispielsweise an eine Wechselspannungsquelle mit 50 Hz oder einer höheren Frequenz angeschlossen ist. Damit besteht die Möglichkeit, unabhängig davon, ob mit dem Schreib-/Lesegerät 20 ein Einlesen oder Auslesen von Informationen erfolgen soll, die Informationsträgereinheit 10"" so lange mit Energie zu versorgen, so lange das Wechselfeld 31 existent ist.

Die Frequenz des Wechselfeldes 31 und eine Resonanzfrequenz des Antennenteils 18b können so aneinander angepasst werden, dass der Antennenteil 18b in Resonanz betrieben ist und somit eine optimale Energieeinkopplung aus dem Wechselfeld 31 erlaubt.

Eine derartige vom Schreib-/Lesegerät 20 unabhängige Versorgung der Informationsträgereinheit 10"" mit elektrischer Energie ist insbesondere dann sinnvoll, wenn mit dem Sensor 30 über längere Zeiträume eine physikalische Zustandsgröße erfasst werden soll, die nicht mit dem Zeitraum der Ankopplung des Schreib-/Lesegeräts 20 an die Antenneneinheit 18a zusammenfallen, sondern von dieser unabhängig sein sollen.

Somit lässt sich beispielsweise die Informationsträgereinheit 10"" durch Einschalten des elektromagnetischen Wechselfeldes 31 aktivieren, so dass seitens des Sensors 30 physikalische Zustandsgrößen gemessen und über den Prozessor 12 erfasst sowie beispielsweise im Speicherfeld 28 abgelegt werden können, unabhängig von der Tatsache, ob das Schreib-/Lesegerät 20 mit der Antenneneinheit 18 gekoppelt ist oder nicht.

Mit einer derartigen Informationsträgereinheit 10"" besteht die Möglichkeit mit dem Sensor 30 über lange Zeiträume Messungen durchzuführen, so dass auch eine Vielzahl von Messwerten anfällt, die zu einer großen Datenmenge führt, wenn alle Messwerte gespeichert werden.

Aus diesem Grund erfolgt seitens des Prozessors 12 eine Auswahl der Messwerte nach mindestens einem Auswahlkriterium, um die Datenmenge im Speicherfeld 28 zu reduzieren.

Ein Auswahlkriterium ist beispielsweise ein Schwellwert, bei dessen Überschreiten ein Speichern des Messwerts erfolgt, so dass damit die Datenmenge drastisch reduziert wird.

Ein anderes Auswahlkriterium kann auch eine statistische Verteilung darstellen, so dass nur Messwerte, die von einer vorab ermittelten statischen Verteilung signifikant abweichen, gespeichert werden und folglich auch dadurch die Datenmenge reduziert wird.

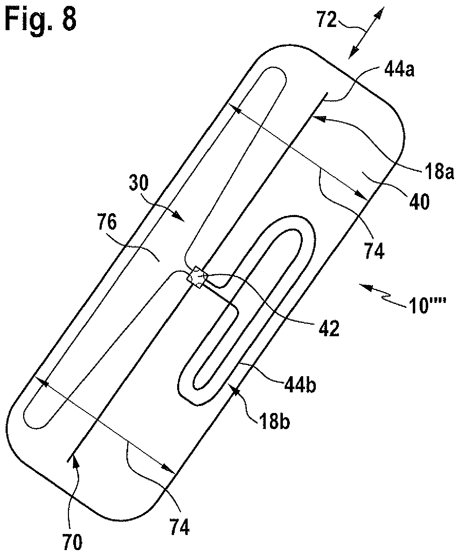

Eine Realisierung des fünften Ausführungsbeispiels der Informationsträgereinheit 10"", dargestellt in Fig. 8, umfasst eine Basis 40, die in gleicher Weise wie beim ersten oder vierten Ausführungsbeispiel ausgebildet ist.

Ferner sind auf der Basis 40 der integrierte Schaltkreis 42 mit den Leiterbahnen 44a angeordnet, die bei diesem Ausführungsbeispiel den als Dipolantenne 70 ausgebildeten Antennenteil 18a für die Kommunikation mit dem Schreib-/Lesegerät 20 im UHF Frequenzbereich bilden, während Leiterbahnen 44b eine Spule bilden, die den Antennenteil 18b darstellt, welcher den elektromagnetischen Wechselfeldern 31 die Energie zum Betreiben der Informationsträgereinheit 10"" bei niedrigeren Frequenzen entzieht.

Die Leiterbahnen 44a der Dipolantenne 70 erstrecken sich vorzugsweise in einer ersten Richtung 72 und weisen radial zur ersten Richtung 72 ausgerichtete Dipolstrahlungsrichtungen 74 auf, in Richtung von welchen primär eine Abstrahlung eines elektromagnetischen Feldes erfolgt.

Außerdem ist auf der Basis 40 der Sensor 30 in Form einer neben der Dipolantenne 70 angeordneten mehrlagigen Schichtstruktur 76 angeordnet, die bei diesem Ausführungsbeispiel beispielsweise ein Platz sparender, kapazitiver Feuchtigkeitssensor ist, so dass der Sensor 30 ebenfalls entweder unmittelbar neben dem integrierten Schaltkreis 42 angeordnet sein kann oder als Teil des integrierten Schaltkreises 42.

Der kapazitive Sensor 30 des fünften Ausführungsbeispiels kann aufgrund seiner zustandsabhängigen Kapazität alternativ zum Feuchtigkeitssensor auch als ein Temperatur- oder ein Drucksensor ausgebildet sein.

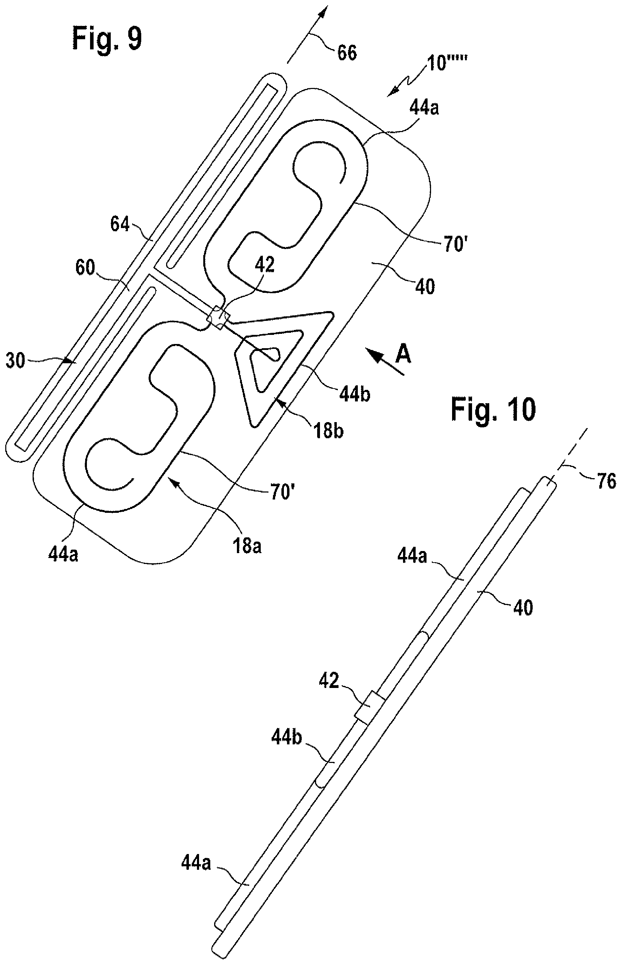

Eine Realisierung eines sechsten Ausführungsbeispiels der Informationsträgereinheit 10""', dargestellt in Fig. 9 und 10, umfasst eine Basis 40, die in gleicher Weise wie beim ersten und fünften Ausführungsbeispiel ausgebildet ist.

Ferner sind auf der Basis 40 der integrierte Schaltkreis 42 und die Leiterbahnen 44a und 44b angeordnet, wobei bei diesem Ausführungsbeispiel die Leiterbahnen 44a eine gefaltete Dipolantenne 70' bilden.

Bei diesem Ausführungsbeispiel ist der Sensor 30 als Dehnungsmessstreifen 60 ausgebildet, welcher bei diesem Ausführungsbeispiel auf einer mit der Basis 40 verbundenen Unterlage 64 angeordnet ist, die in einer Längsrichtung 66 des Dehnungsmessstreifens 60 dehnbar ist.

Bei dieser Informationsträgereinheit 10""' sind somit, sofern der Dehnungsmessstreifen 60 mit einem zu dehnenden Bestandteil eines Leitungsstranges eines Leitungssatzes fest verbunden ist, Dehnungen in der Längsrichtung 66 des Dehnungsmessstreifens messbar und seitens des Prozessors 12 auf dem integrierten Schaltkreis 42 speicherbar.

Die vorstehend erläuterten Ausführungsbeispiele von Informationsträgereinheiten 10 bis 10""' sind bei verschiedenen Arten von Leitungssätzen und verschiedenen Arten von Leitungsaufnahmeeinheiten einsetzbar, wie nachfolgend anhand einiger Ausführungsbeispiele beschrieben wird.

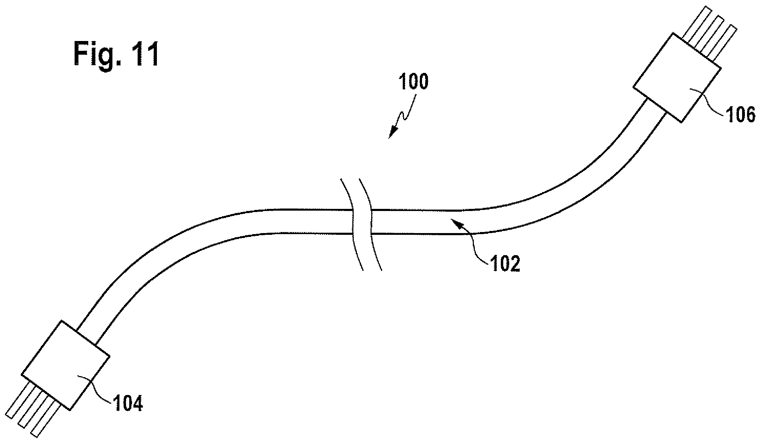

Ein erstes Ausführungsbeispiel eines erfindungsgemäßen Leitungssatzes 100, dargestellt in Fig. 11, umfasst einen Leitungsstrang 102 und beispielsweise endseitig desselben angeordnete Leitungsaufnahmeeinheiten 104 und 106, die zusammen mit dem Leitungsstrang 102 den Leitungssatz 100 bilden.

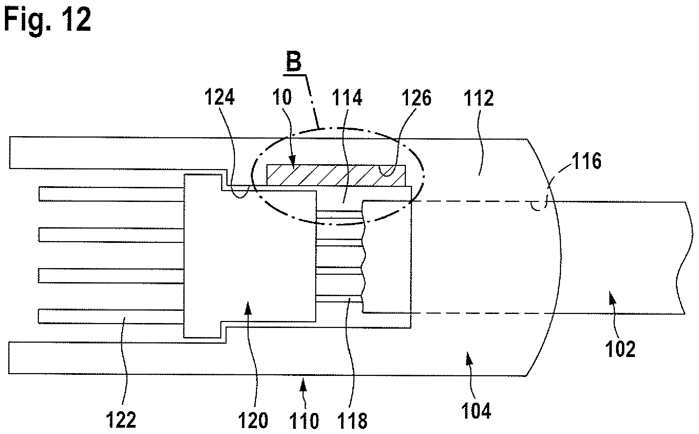

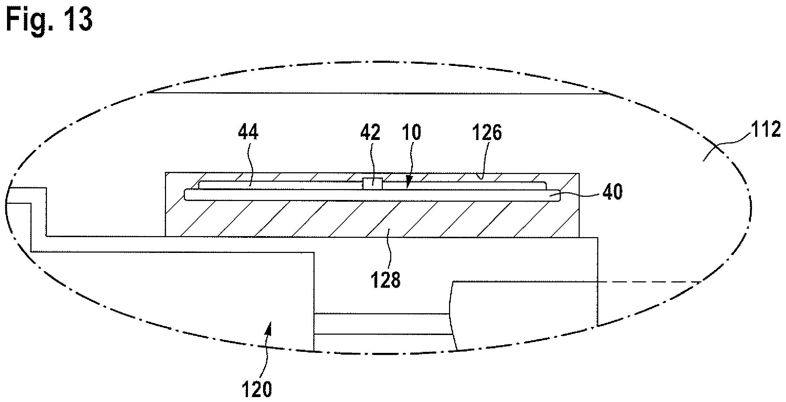

Wie beispielsweise in Fig. 12 und 13 dargestellt, ist die Leitungsaufnahmeeinheit 104 als Steckverbinderelement 110 ausgebildet und umfasst als Basisteil ein Außengehäuse 112, welches einen Innenraum 114 umschließt, in welchen von einer Seite über eine Einführöffnung 116 der Leiterstrang 102 einführbar ist, um beispielsweise einzelne Leitungen 118 mit von einem Kontakteinsatz 120 gehaltenen Kontaktelementen 122 elektrisch leitend zu verbinden.

Der Kontakteinsatz 120 ist dabei in eine der Einführöffnung 116 gegenüberliegende, ebenfalls auf einer Seite des Innenraums 114 angeordnete Aufnahme 124 im Außengehäuse 112 einsetzbar und in unterschiedlichster Art und Weise fixierbar.

Bei dem ersten Ausführungsbeispiel des erfindungsgemäßen Leitungssatzes 100 ist das Steckverbinderelement 110 mit einer Informationsträgereinheit 10, beispielsweise gemäß dem ersten Ausführungsbeispiels versehen, wobei hierzu das Außengehäuse 112 auf einer dem Innenraum 114 zugewandten Seite eine Ausnehmung 126 aufweist, in welche die Informationsträgereinheit 10 mit der Basis 40 und dem auf dieser angeordneten integrierten Schaltkreis 42 mitsamt den Leiterbahnen 44 eingelegt und mittels einer Vergussmasse 128 eingebettet ist, wobei die Vergussmasse 128 im Wesentlichen die Ausnehmung 126 auffüllt und somit sowohl die Basis 40 als auch den integrierten Schaltkreis 42 und die Leiterbahnen 44 vollständig einbettet und umschließt, so dass die Informationsträgereinheit 10 in dem Außengehäuse 112 hermetisch abgeschlossen und geschützt aufgenommen ist.

Bei diesem ersten Ausführungsbeispiel trägt die Informationsträgereinheit 10 beispielsweise Informationen über den Leitungssatz 100, die beispielsweise angeben, wie die einzelnen Kontaktelemente 122 mit den einzelnen Leitungen 118 verbunden sind, in welchem Muster die Kontaktelemente 122 im Kontakteinsatz 120 angeordnet sind und auch beispielsweise Information darüber, wie die einzelnen Leitungen 118 dimensioniert sind.

Es besteht aber beispielsweise auch noch die Möglichkeit, in der Informationsträgereinheit 10 beispielsweise Messprotokolle über die Vermessung des fertigen Leitungssatzes 100 nach dessen Herstellung abzulegen, so dass insbesondere dann, wenn es sich um einen Leitungssatz mit höchsten Anforderungen handelt, genaue Daten über die Leistungsfähigkeit der Verbindungen zwischen den Leitungen 118 und den einzelnen Kontaktelementen 122 sowie über die Belastbarkeit der Leitungen 118 abgelegt werden können.

Es besteht aber ebenfalls noch die Möglichkeit, in der Informationsträgereinheit 10 Informationen über die Einsetzbarkeit des Leitungssatzes 110, das heißt dessen Beständigkeit gegenüber Umwelteinflüssen und Umgebungsbedingungen oder auch sogar dessen Lebensdauer bei unterschiedlichen Umgebungsbedingungen oder Umgebungseinflüssen, abzulegen.

Die Anordnung der erfindungsgemäßen Informationsträgereinheit 10 in einer zum Innenraum 114 hin offenen Ausnehmung 126 im Außengehäuse 112 hat den Vorteil, dass damit die Informationsträgereinheit 10 optimal gegen Einwirkungen von außen, insbesondere auch gegen mechanische Einwirkungen, wie Schlag- oder Stoßeinwirkungen geschützt ist.

Allerdings hat diese Anordnung das Problem, dass die Informationsträgereinheit 10 nur dann in allen Eingangs beschriebenen Frequenzbereichen betrieben werden kann, wenn das Außengehäuse aus einem nicht abschirmenden Material, beispielsweise Kunststoff, ist.

Ist das Außengehäuse 112 aus dünnem Metall, so ist eine Informationsträgereinheit 10 einsetzbar, deren Antenneneinheit 18 im LF-Frequenzbereich arbeitet.

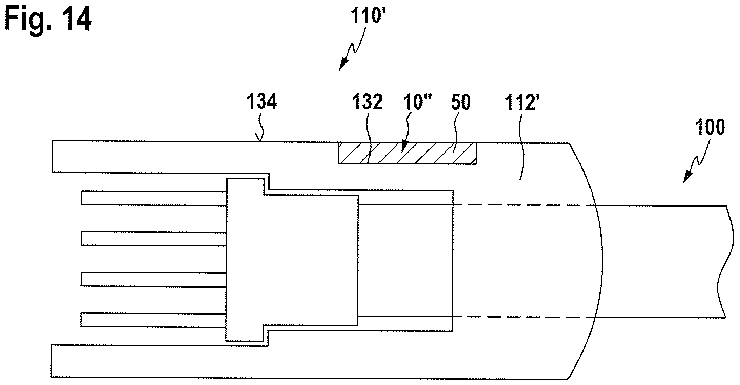

Aus diesem Grund ist bei einem zweiten Ausführungsbeispiel eines erfindungsgemäßen Leitungssatzes 100 in Fig. 14 die Informationsträgereinheit, in Form des dritten Ausführungsbeispiels 10" in eine Ausnehmung 132 des Außengehäuses 112' eingesetzt, die sich ausgehend von einer Außenwand 134 des Außengehäuses 112' in dieses hinein erstreckt.

Beispielsweise ist dabei der Einbettkörper 50 so ausgebildet, dass dieser im Wesentlichen formschlüssig die Ausnehmung 132 auffüllt und im Wesentlichen bündig mit der Außenwand 134 abschließt, so dass keinerlei Veränderung der Außenkontur des Steckverbinderelements 110' erfolgt und im Übrigen die Informationsträgereinheit 10" in einfacher Weise in die Ausnehmung 132, selbst bei fertig montiertem Leitungssatz 100 in das Steckverbinderelement 110' nachträglich einsetzbar ist.

Diese Lösung erlaubt es beispielsweise, je nach Ausführung des Leitungssatzes 100 bei komplett fertig konfektioniertem Leitungssatz 100 eine Informationsträgereinheit 10" in das Steckverbinderelement 110' einzusetzen oder nicht einzusetzen oder gegebenenfalls auch die Informationsträgereinheit 10" vor dem Einsetzen in der Ausnehmung 132 im Außengehäuse 112' mit Informationen in einer beispielsweise hierfür vorgesehenen Einrichtung vorher zu beschreiben, so dass beim Einsetzen der Informationsträgereinheit 10" in die Ausnehmung 132 der Leitungssatz 100' bereits vollständig aufgebaut ist.

Außerdem hat diese Lösung auch noch den Vorteil, dass durch die Anordnung der Ausnehmung 132 so, dass diese sich ausgehend von der Außenwand 134 in das Außengehäuse 112' hineinerstreckt, Abschirmwirkungen eines aus Metall hergestellten Außengehäuses 112' vermieden werden können, so dass die Informationsträgereinheit 10" bei dem zweiten Ausführungsbeispiel des erfindungsgemäßen Leitungssatzes 100 nicht zwingend im LF-Frequenzbereich betrieben werden muss, sondern insbesondere im HF-Frequenzbereich betrieben werden kann, wenn die HF-Antenne durch geeignete Feldabschirmungen von der Metalleinwirkung geschützt wird.

Im Übrigen kann die Informationsträgereinheit 10" bei dem zweiten Ausführungsbeispiel des erfindungsgemäßen Leitungssatzes 100 die gleichen Informationen tragen, wie dies im Zusammenhang mit dem ersten Ausführungsbeispiel beschrieben wurde, so dass insgesamt hinsichtlich derjenigen Teile, die mit denen des ersten Ausführungsbeispieles dieselben Bezugszeichen aufweisen, vollinhaltlich auf die Ausführungen zum ersten Ausführungsbeispiel Bezug genommen wird.

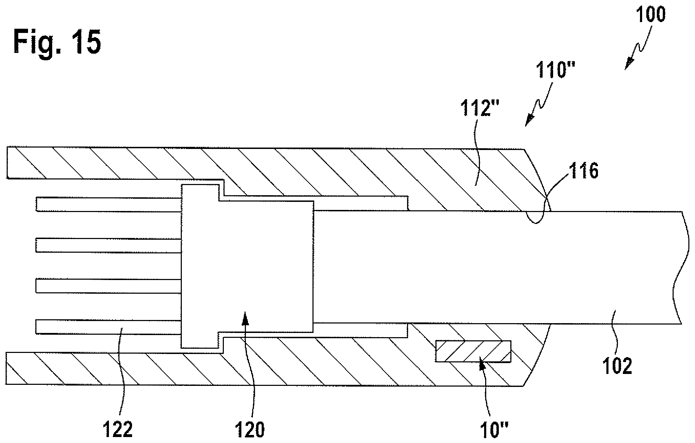

Bei einem dritten Ausführungsbeispiel eines erfindungsgemäßen Leitungssatzes 100, dargestellt in Fig. 15, ist eine erfindungsgemäße Identifikationseinheit 10" gemäß dem dritten Ausführungsbeispiel in das Außengehäuse 112" eingebettet, so dass der Einbettkörper 50 vollständig von dem Material des Außengehäuses 112" umschlossen ist.

Das Außengehäuse 112" ist in diesem Fall vorzugsweise als Kunststoffgehäuse, insbesondere als Kunststoffspritzgussteil, ausgebildet, so dass der Einbettkörper 50 in die Spritzgussform beim Spritzen des Außengehäuses 112" eingelegt werden kann.

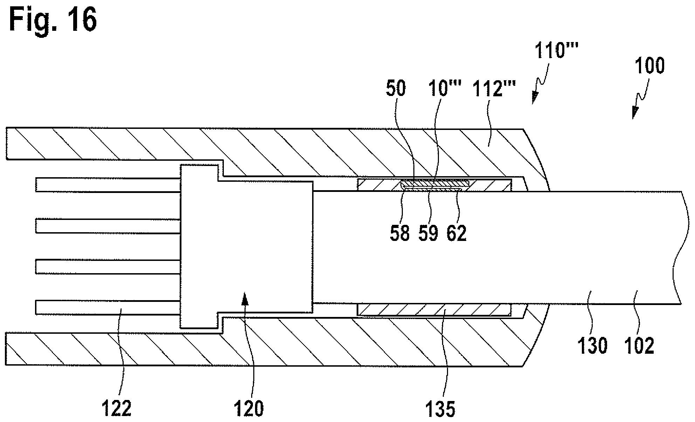

Bei einem vierten Ausführungsbeispiel eines erfindungsgemäßen Leitungssatzes 100, dargestellt in Fig. 16, ist der Leitungsstrang 102 im Bereich einer Mantelfläche 130 mittels eines Klemmelements 135 im Außengehäuse 112"' kraftschlüssig fixiert, wobei das Klemmelement 135 beispielsweise ein durch das Außengehäuse 112"' vorspannbares elastisches Element ist, welches beispielsweise formschlüssig im Außengehäuse 112"' gehalten ist und kraftschlüssig gegen die Mantelfläche 130 gepresst ist.

Bei diesem Ausführungsbeispiel ist in dem Klemmelement 135 eine Informationsträgereinheit 10"' gemäß dem vierten Ausführungsbeispiel eingebettet, wobei der Einbettkörper 50 in dem Klemmelement 135 formschlüssig gehalten ist und die Sensorfahne 59 an der Mantelfläche 130 anliegt und dabei vorzugsweise mit ihrer Seite 62 an der Mantelfläche 130 fixiert ist, so dass die Möglichkeit besteht, zusätzlich zum Speichern von Informationen im beschriebenen Umfang noch Zugkräfte auf den Leitungsstrang 102 mittels des Dehnungsmessstreifens 60 in der Sensorfahne 59 zu erfassen, um beispielsweise festzustellen, ob das Steckverbinderelement 110"' seitens des Leitungsstrangs 102 Zugkräfte erfahren hat, die beispielsweise einen Schwellwert überschritten haben, so dass unsicher ist, ob die Verbindungen der einzelnen Leitungen 118 mit den Kontaktelementen 122 noch zuverlässig und belastbar bestehen.

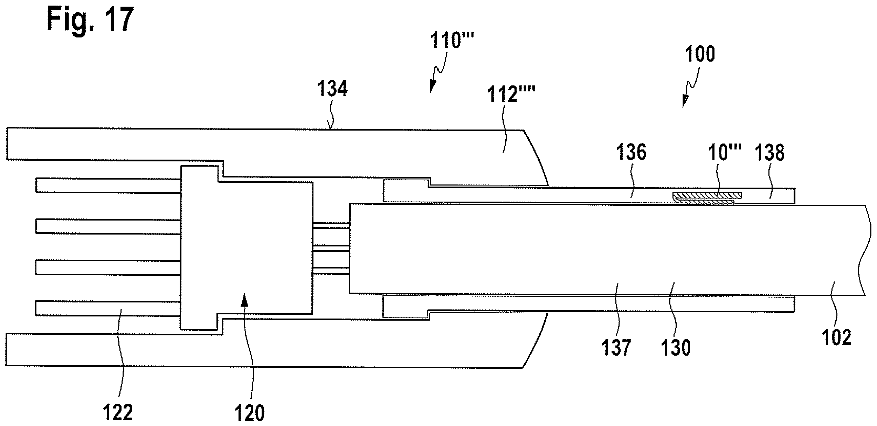

Bei einem fünften Ausführungsbeispiel eines erfindungsgemäßen Leitungssatzes 100, dargestellt in Fig. 17 ist an dem Außengehäuse 112"" als Schutzelement für den Leitungsstrang 102 ein Knickschutz 136 vorgesehen, der ausgehend von dem Außengehäuse 112"" ein sich an dieses anschließendes Endstück 137 des Leitungsstrangs 102 umschließt und gegenüber dem Außengehäuse 112"" abstützt, um ein Abknicken des Leitungsstrangs 102 beim Austritt aus dem Außengehäuse 112"" zu vermeiden.

Bei diesen Ausführungsbeispiel ist in dem Knickschutz 136 eine Informationsträgereinheit 10"' gemäß dem dritten Ausführungsbeispiel gehalten, die beispielsweise in einen Wandabschnitt 138 des Knickschutzes 136 eingebettet ist oder in eine Ausnehmung desselben eingesetzt ist.

Der Vorteil der Anordnung der Informationsträgereinheit 10"' im Knickschutz 136 zum Beispiel aus Kunststoff oder Gummi ist der, dass die Kommunikation zum Beispiel mit einem Schreib-/Lesegerät 20 problemlos ist, dass selbst bei einem metallischen Außengehäuse 112"" des Steckverbinderelements 110"" keine Beeinträchtigung durch dieses oder andere Teile des Steckverbinderelements 110"" erfolgt.

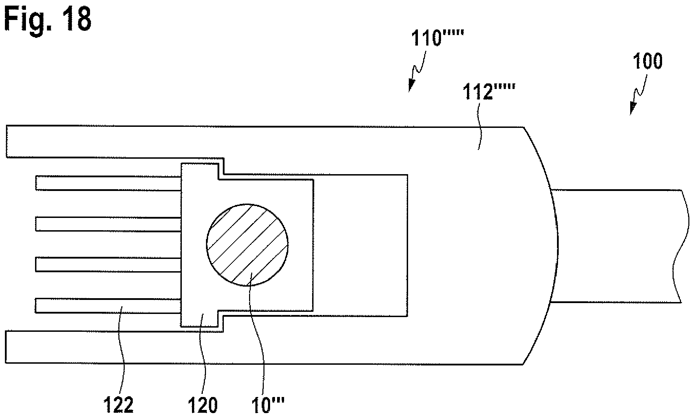

Bei einem sechsten Ausführungsbeispiel eines erfindungsgemäßen Leitungssatzes 100, dargestellt in Fig. 18, ist die Informationsträgereinheit, beispielsweise eine erfindungsgemäße Informationsträgereinheit 10"', nicht in dem Außengehäuse 112"'" angeordnet, sondern in einer Ausnehmung des Kontakteinsatzes 120 und somit in der Lage, im Bereich des Kontakteinsatzes 120 mit dem vorgesehenen Sensor 30 zusätzliche physikalische Größen zu erfassen.

Beispielsweise wäre es denkbar, mit einer derartigen Informationsträgereinheit 10"' die Temperatur im Kontakteinsatz zu erfassen, um festzustellen, ob beispielsweise die Kontaktelemente 122 hohen Strömen ausgesetzt waren und somit eine nennenswerte Erwärmung aufgetreten ist, die beispielsweise zu einer Schädigung der Verbindung zwischen den Leitungen 118 und den Kontaktelementen 122 hätte führen können.

Über die Erwärmung des Kontakteinsatzes 120 lässt sich ebenfalls feststellen, ob beispielsweise auch im Bereich der Kontaktelemente 122, insbesondere der Steckverbindung der Kontaktelemente 122 mit Gegenkontaktelementen, große Übergangswiderstände aufgetreten sind, die ebenfalls zu einer Erwärmung der Kontaktelemente 122 geführt haben, die über einem Schwellwert liegt.

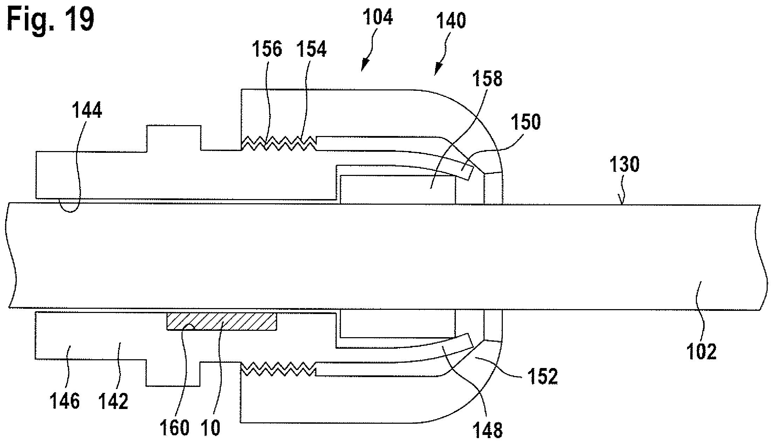

Bei einem weiteren Ausführungsbeispiel eines erfindungsgemäßen Leitungssatzes 100 - dargestellt in Fig. 19 - ist die Leitungsaufnahmeeinheit 104 nicht als Steckverbinderelement 110 ausgebildet, sondern als Kunststoffkabelverschraubung 140, welche als Basisteil eines Gehäuses einen Stutzen 142 mit einem Durchlass 144 für den Leitungsstrang 102 aufweist.

Der Stutzen 142 ist mit einer Befestigungsseite 146 versehen, welche dazu dient, den Stutzen 142 an beliebigen Elementen, beispielsweise an einem Gehäuse oder einem Gerät, zu fixieren, und auf einer der Befestigungsseite 146 gegenüberliegenden Seite mit einem Lamellenkorb 148 versehen, welcher quer zur Mantelfläche 130 des Leitungsstrangs 102 bewegbare einzelne Lamellen 150 aufweist, die in bekannter Weise durch eine Überwurfmutter 152 als weiteres Gehäuseteil beaufschlagbar sind, wobei die Überwurfmutter 152 mit einem Gewinde 154 versehen ist und mit diesem Gewinde 154 auf ein am Stutzen 142 angeordnetes Gewinde 156 aufschraubbar ist, um dadurch die einzelnen Lamellen 150 des Lamellenkorbs 148 in Richtung auf die Mantelfläche 130 des Leitungsstrangs 102 zu beaufschlagen.

In dem Lamellenkorb 148 sitzt vorzugsweise ein Klemmelement 158, mit welchem der Leitungsstrang 102 im Bereich der Mantelfläche 130 fixierbar ist, wobei das Klemmelement 158 beispielsweise ein Ring aus einem elastischen Material, vorzugsweise Gummi, ist, der durch die Lamellen 150 an die Mantelfläche 130 anpressbar ist, um somit den Leitungsstrang 102 kraftschlüssig zu fixieren und außerdem einen dichten Abschluss zwischen der Mantelfläche 130 des Leitungsstrangs 102 und dem Stutzen 142 herzustellen.

Bei einer derartigen Kabelverschraubung 140 besteht die Möglichkeit, beispielsweise eine Informationsträgereinheit 10 gemäß dem ersten Ausführungsbeispiel in einer in dem Stutzen 142 vorgesehenen Ausnehmung 160 anzuordnen, wobei sich die Ausnehmung 160 von dem Durchlass 144 in radialer Richtung in den Stutzen 142 hineinerstreckt und somit eine in die Ausnehmung 160 eingesetzte Informationsträgereinheit 10 den Durchlass 144 für den Leitungsstrang 102 nicht verengt.

Beispielsweise lässt sich die Informationsträgereinheit 10 in gleicher Weise wie bei dem ersten Ausführungsbeispiel des Leitungssatzes 100, dargestellt in Fig. 12 und 13, in der Ausnehmung 160 anordnen.

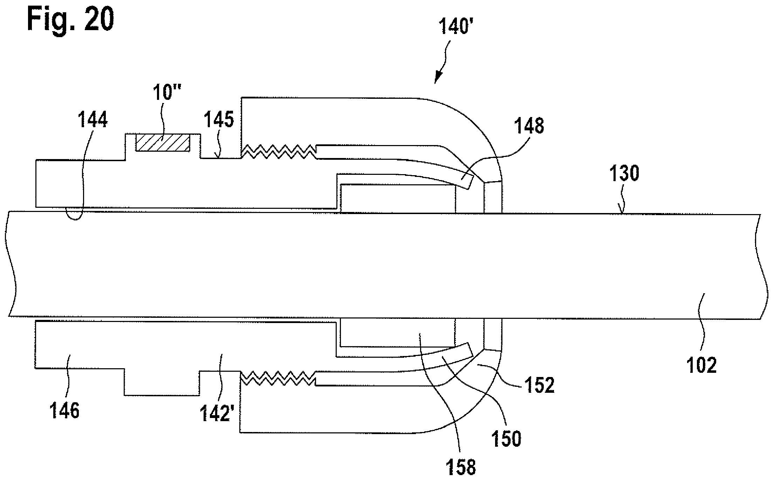

Bei einem zweiten Ausführungsbeispiel einer erfindungsgemäßen Kabelverschraubung 140' - dargestellt in Fig. 20 - ist in den Stutzen 142 der Kabelverschraubung 140' eine Informationsträgereinheit 10" gemäß dem dritten Ausführungsbeispiel eingesetzt, wobei das Fixieren beispielsweise durch Umgießen der in eine zu einer Außenseite 145 hin offene Ausnehmung eingesetzten Informationsträgereinheit 10" erfolgt.

Im Übrigen ist dieses Ausführungsbeispiel 140' der Kabelverschraubung in gleicher Weise ausgebildet wie das erste Ausführungsbeispiel der Kabelverschraubung 140.

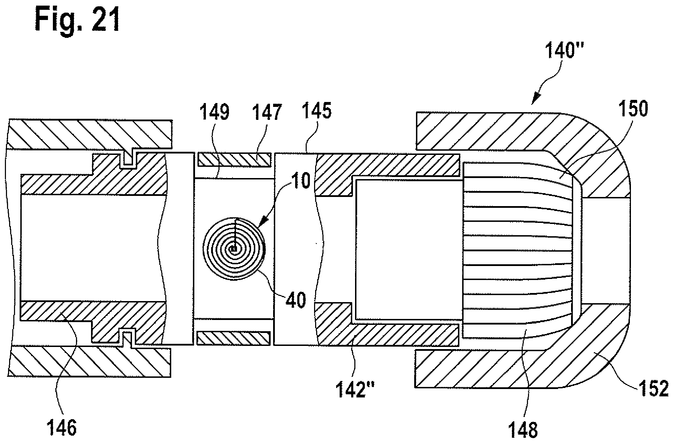

Bei einem dritten Ausführungsbeispiel einer erfindungsgemäßen Kabelverschraubung 140" - dargestellt in Fig. 21 - ist in dem Stutzen 142" eine von der Außenseite 145 ausgehende nutähnliche, zumindest über einen Teilumfang verlaufende Vertiefung 145 vorgesehen, in welche ein Abdeckring 147 einsetzbar ist.

Bei dem dritten Ausführungsbeispiel liegt eine Basis 40 einer Informationsträgereinheit 10 gemäß dem ersten Ausführungsbeispiel direkt in der Vertiefung 145 und ist durch den Abdeckring 147 in dieser fixiert.

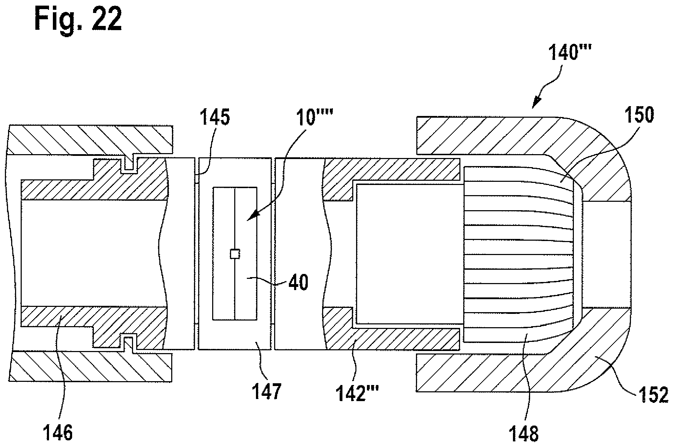

Bei einem vierten Ausführungsbeispiel einer erfindungsgemäßen Kabelverschraubung 140'" - dargestellt in Fig. 22 - ist die Basis 40 der Informationsträgereinheit 10"" gemäß dem fünften Ausführungsbeispiel in den Abdeckring 147 eingebettet und somit mittels des Abdeckrings 147 auswechselbar an dem Stutzen 142"' fixierbar.

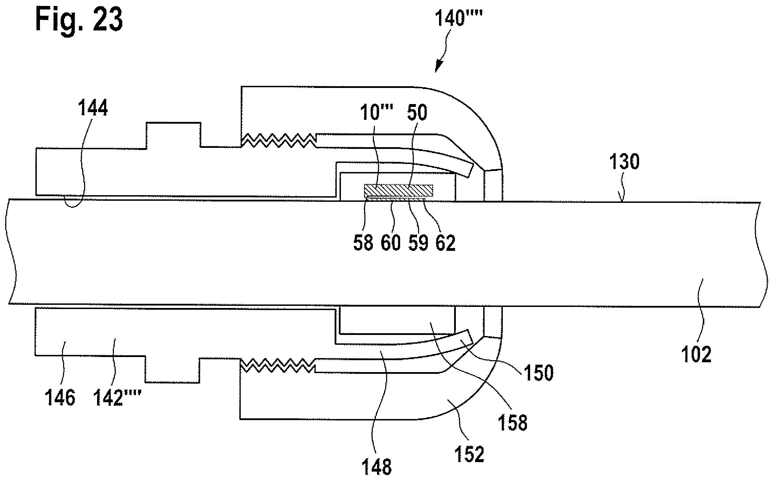

Bei einem fünften Ausführungsbeispiel einer erfindungsgemäßen Kabelverschraubung 140"" - dargestellt in Fig. 23 - ist die Informationsträgereinheit 10'" gemäß dem vierten Ausführungsbeispiel in dem Klemmelement 158 angeordnet und zwar so, dass der Einbettkörper 50 in dem Klemmelement selbst sitzt, während die Sensorfahne 59 an der Mantelfläche 130 des Leitungsstrangs anliegt, insbesondere mit ihrer Seite 62 an der Mantelfläche 130 fixiert ist, so dass der in der Sensorfahne 59 integrierte Dehnungsmessstreifen 60 in der Lage ist, durch den Leitungsstrang 102 auf das Klemmelement 158 einwirkende Zugkräfte zu erfassen.

Damit besteht die Möglichkeit, nicht nur Informationen zu speichern, sondern gleichzeitig auch noch auf den Leitungsstrang 102 wirkende Zugkräfte zu erkennen und insbesondere zu erkennen, ob diese einen Wert überschritten haben, der für den Leitungsstrang 102, insbesondere dessen Lebensdauer oder Funktionsfähigkeit, relevant ist.

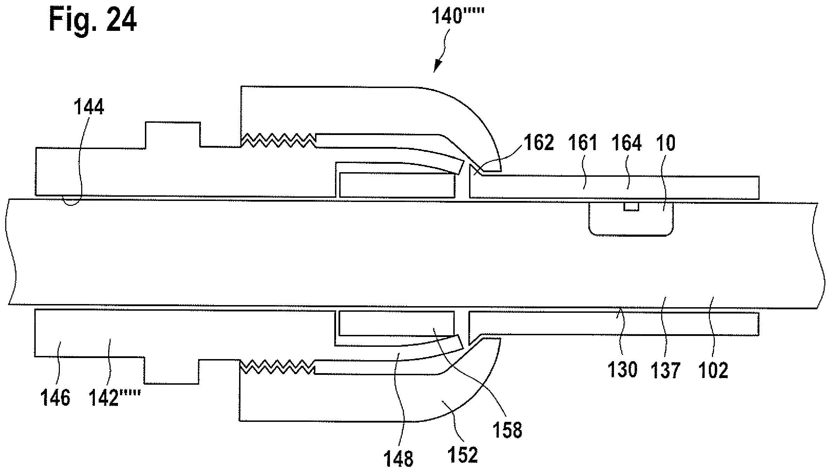

Bei einem sechsten Ausführungsbeispiel einer Kabelverschraubung 140""', dargestellt in Fig. 24 erstreckt sich ausgehend von der Überwurfmutter 152 ein Schutzelement 161, das ein Endstück 137 des Leitungsstrangs 102 umschließt, welches sich ausgehend von dem Klemmelement 158 aus der Überwurfmutter 152 heraus erstreckt.

Das Schutzelement 161 ist beispielsweise als Schutzhülse ausgebildet mit einem Halteansatz 162 in der Überwurfmutter 152 gehalten und überdeckt eine Informationsträgereinheit 10 gemäß dem ersten Ausführungsbeispiel die in diesem Fall auf der Mantelfläche 130 des Endstücks 137 des Leitungsstrangs 102 angeordnet ist, zum Beispiel in der Art eines Etiketts aufgeklebt ist, so dass das Schutzelement 161 auch die Informationsträgereinheit 10 mit einem Wandabschnitt 164 überdeckt und schützt.

Im dargestellten Ausführungsbeispiel ist das Schutzelement 161 beispielsweise eine Schutzhülse aus Gummi oder Kunststoff.

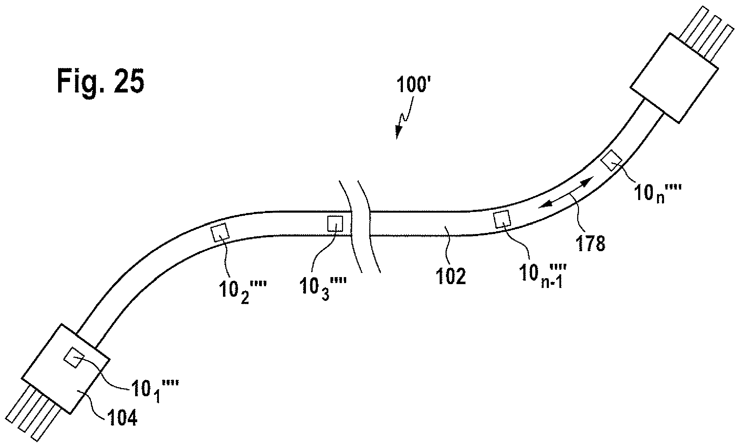

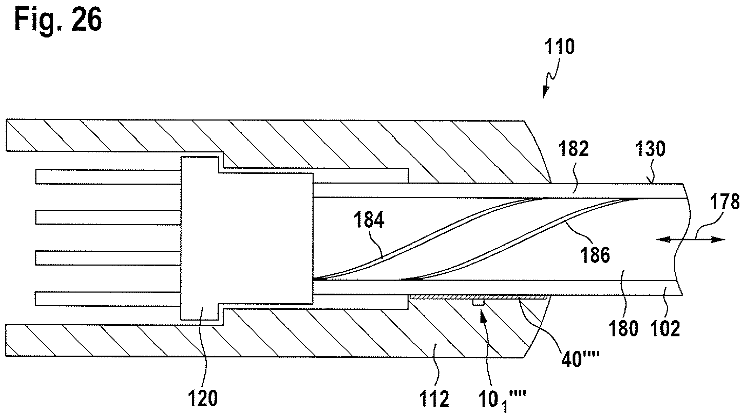

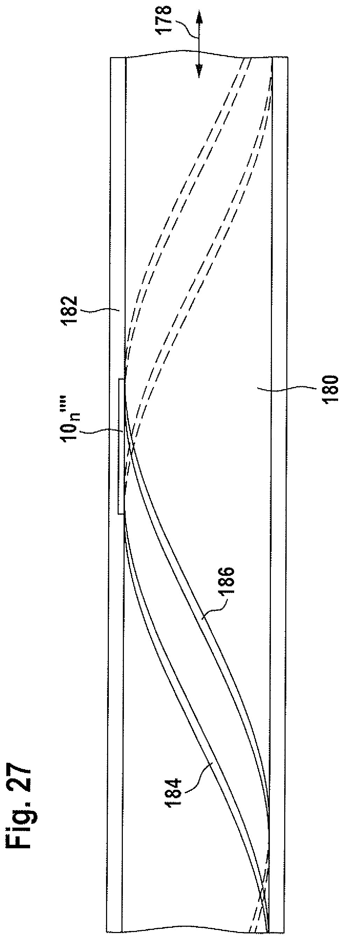

Bei einem weiteren Ausführungsbeispiel eines erfindungsgemäßen Leitungssatzes 100' ist sowohl der Leitungsstrang 102 als auch die Leitungsaufnahmeeinheit 104 mit Informationsträgereinheiten, beispielsweise die Informationsträgereinheiten gemäß dem fünften oder sechsten Ausführungsbeispiel, versehen. Im in Fig. 25 bis 27 dargestellten Ausführungsbeispiel umfasst der Leitungsstrang 102 beispielsweise einen Innenkörper 180, der von einem Mantel 182 umschlossen ist.

Dabei verlaufen in dem Innenkörper 180 einzelne Leitungen, beispielsweise die Leitungen 184 und 186, die auch mit weiteren nicht im Einzelnen dargestellten Leitungen im Innenkörper 180 verseilt sind.

Beispielsweise führen die Leitungen 184 und 186 einen Wechselstrom mit einer Frequenz von 50 Hz, der somit das magnetische Wechselfeld 31 (Fig. 7) erzeugt, welches auf die Antennenteile 18b der Informationsträgereinheiten 10₁"" bis 10ₙ"" gemäß dem fünften Ausführungsbeispiel wirkt, so dass diese in der Lage sind, dem magnetischen Wechselfeld 31 Energie zu entziehen und damit die Informationsträgereinheiten 10"" so lange, so lange der Strom in den Leitungen 184 und 186 fließt, mit Energie zu versorgen.

Die einerseits im Steckverbinderelement 110 angeordnete Informationsträgereinheit 10₁"" und die andererseits in definierten vorzugsweise konstanten Abstände A im Leitungsstrang 102 angeordneten Informationsträgereinheiten 10₂"" bis 10ₙ"" sind somit in der Lage, unabhängig von der Präsenz eines Schreib-/Lesegerätes 20 zu arbeiten und Informationen zu erfassen.

Darüber hinaus können die Informationsträgereinheiten 10"" aufgrund der Tatsache, dass diese im UHF-Bereich arbeiten und die Antennenteile 18a Dipolantennen 70 sind, miteinander in Längsrichtung 178 des Leitungsstrangs 102 in Wechselwirkung treten, so dass beispielsweise die Informationsträgereinheit 10₁"", welche in dem Steckverbinderelement 110 aus Kunststoff angeordnet ist, in der Lage ist, mit der dieser im Leitungsstrang 102 nächstliegenden ersten Informationsträgereinheit 10₂"" in Wechselwirkung treten und mit dieser Informationen austauschen.

Auch die erste Informationsträgereinheit 10₂"" kann wiederum selbst mit der dieser im Leitungsstrang 102 nächstliegenden zweiten Informationsträgereinheit 10₃"" in Wechselwirkung treten und Informationen austauschen, so dass mit diesen Informationsträgereinheiten 10"", die untereinander kommunikationsfähig sind, Informationen in Längsrichtung 178 des Leitungsstrangs 102 weitergegeben werden können.

Ferner ist die Informationsträgereinheit 10₁"" im Steckverbinderelement 110 in der Lage, mit dem Schreib-/Lesegerät 20 Informationen auszutauschen und stellt somit einen Zugang zu einem in dem Leitungssatz 100' vorgesehenen Informationsträgernetzwerk dar, über welches in der Längsrichtung 178 des Leitungsstrangs 102 Informationen übertragbar sind.

Das Schreib-/Lesegerät 20 kann dabei ein mobiles, tragbares Schreib-/Lesegerät sein.

Alternativ dazu ist auch ein stationäres Schreib-/Lesegerät 20 einsetzbar. Ein stationäres Schreib-/Lesegerät kann in einfacher Weise so ausgebildet sein, dass es eine größere Antenne 19 aufweist und mit höherer Abstrahlleistung sendet als ein mobiles tragbares Schreib-/Lesegerät, so dass eine wesentlich höhere Kommunikationsreichweite mit der Informationsträgereinheit möglich ist. So ist es beispielsweise möglich, direkt mit Informationsträgereinheiten im Leitungsstrang zu kommunizieren.

Aus Gründen einer geregelten Kommunikation ist jedoch vorteilhafterweise vorgesehen, dass das Schreib-/Lesegerät, auch wenn es stationär ist, zunächst mit der Informationsträgereinheit in dem Steckverbinderelement kommuniziert und dieses dann wiederum mit den Informationsträgereinheiten, insbesondere der nächstliegenden Informationsträgereinheit 10"" in dem Leitungsstrang 102.

Ist beispielsweise der den Informationsträgereinheiten 10₂"" bis 10ₙ"" zugeordnete Sensor 30 ein Temperatursensor, so besteht die Möglichkeit, über die Informationsträgereinheit 10₁"" im Steckverbinderelement 110 die Temperaturen der Sensoren 30 der übrigen Informationsträgereinheiten 10₂"" bis 10ₙ"", die längs des Leitungsstrangs 102 angeordnet sind, abzufragen und somit dem Schreib-/Lesegerät 20 zu übermitteln.

In gleicher Weise können andere durch die Sensoren 30 erfassbare physikalische Größen, wie beispielsweise Zug, Druck, Feuchtigkeit oder auch Strahlung ermittelt und abgefragt werden.

Der Vorteil dieser erfindungsgemäßen Lösung besteht darin, dass das Steckverbinderelement 110 unabhängig davon, wie der Leitungssatz 100' verlegt ist, stets das zugängliche Element darstellt, so dass auch über das Steckverbinderelement 110 der Zugang zu dem Informationsträgernetzwerk des Leitungssatzes 100' gegeben ist, wobei hierzu entweder ein mobiles Schreib-/Lesegerät 20 eingesetzt werden kann oder ein stationäres Schreibe/Lesegerät 20, das beispielsweise einem mit dem Steckverbinderelement anzuschließenden Gerät oder sogar einem Gegensteckverbinderelement zugeordnet ist.

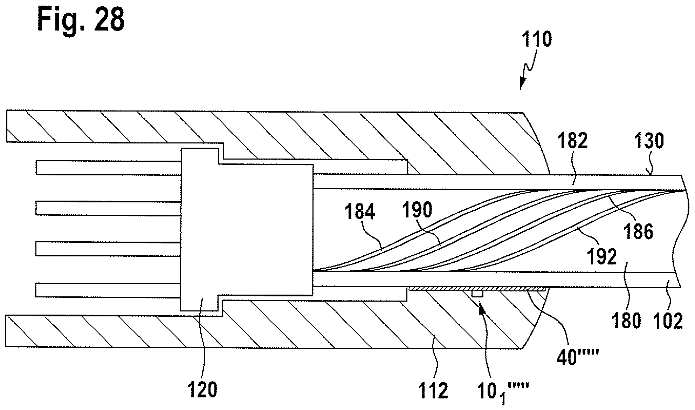

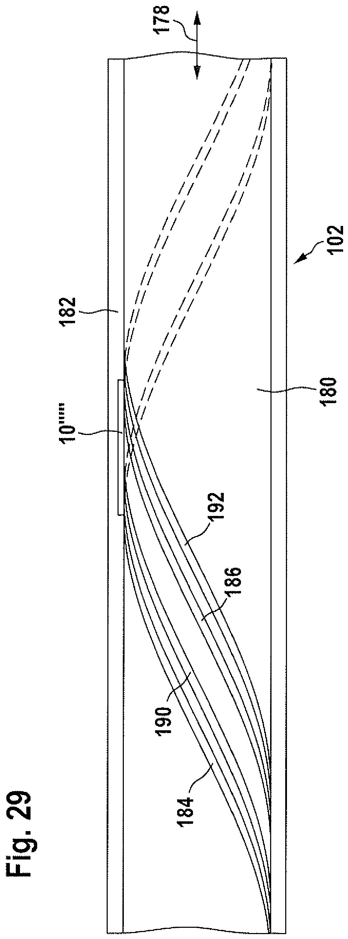

Bei einem weiteren Ausführungsbeispiel eines erfindungsgemäßen Leitungssatzes, dargestellt in Fig. 28 bis 30, sind in ähnlicher Weise wie beim voranstehenden Ausführungsbeispiel Informationsträgereinheiten 10"" gemäß dem fünften Ausführungsbeispiel eingesetzt, die ebenfalls miteinander wechselwirken.

Zur Verbesserung der Wechselwirkung der Informationsträgereinheiten 10""untereinander sind im Innenkörper 180 zusätzlich zu den Leitungen 184 und 186 und weiteren zeichnerisch nicht dargestellten Leitungen noch galvanisch voneinander getrennte Leitungen 190 und 192 vorgesehen, die ebenfalls mit den übrigen Leitungen verseilt sind, so dass alle Leitungen um die Längsrichtung 178 des Leitungsstrangs 102 herum angeordnet sind und in einem Winkel zu einer parallelen zur Längsrichtung 178 verlaufen, welche die jeweilige Leitung 184, 186 oder 190 und 192 schneidet.

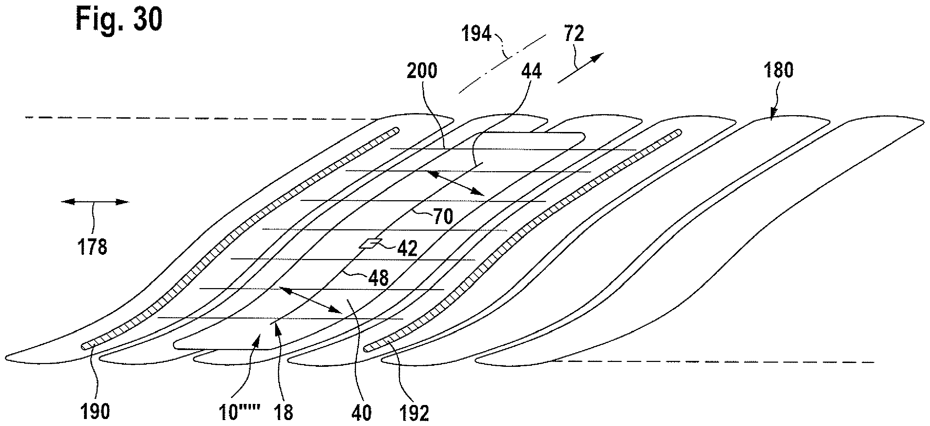

Die Informationsträgereinheiten 10"" sind dabei, wie in Fig. 30 vereinfacht schematisiert lediglich unter Darstellung der Dipolantenne 70 gezeichnet, relativ zu den Leitungen 190 und 192 so ausgerichtet, dass die Richtungen 72, längs welcher sich die Dipolantennen 70 erstrecken, ungefähr parallel zu einer Verseilrichtung 194 verlaufen.

Bei einer Ausrichtung der Dipolantennen 70 wie beschrieben, liegt eine Komponente der Dipolstrahlungsrichtung 74 quer zur Verseilrichtung 194, vorzugsweise senkrecht zu dieser, so dass die Dipolantenne 70 insgesamt quer zur Richtung 72 und somit auch quer zur Längsrichtung der Dipolantenne 70 hauptsächlich abstrahlt und hauptsächlich zum Empfang elektromagnetischer Strahlung geeignet ist.

Sind die Leitungen 190 und 192 galvanisch voneinander getrennt, so kann zwischen diesen Leitungen 190 und 192 und der Dipolantenne 70 der Informationsträgereinheit 10"" eine parasitäre Kopplung über ein elektromagnetisches Feld 200 erfolgen, das dadurch entsteht, dass sich die beiden Leitungen 190 und 192 ebenfalls ähnlich Dipolen verhalten und somit mit der als Dipolantenne 70 ausgebildeten Antenneneinheit 18a in Wechselwirkung treten.

Der Frequenzbereich, in welchem ein sich derartiges elektromagnetisches Feld 200 ausbildet, wird dabei vorzugsweise durch einen Resonanzfrequenzbereich der Antenneneinheit 18 vorgegeben, während die beiden Leitungen 190 und 192 so angeordnet und ausgebildet sind, dass diese keinen Resonanzfrequenzbereich und keine Abschirmung aufweisen, um eine gute Abstrahlung zu erhalten.

Durch diese durch das parasitäre elektromagnetische Feld 200 bedingte Kopplung zwischen der Antenneneinheit 18 der jeweiligen Informationsträgereinheit 10"" und den Leitungen 190 und 192 lässt sich in dem Leitungsstrang 102 eine wirksame Antennenreichweite in der Längsrichtung 178 des Leitungsstrangs 102 erreichen, welche ein Vielfaches, mindestens ungefähr ein Doppeltes, noch besser ein mehr als ungefähr 10-faches einer Antennenreichweite zwischen Antenneneinheiten 18 benachbarter Informationsträgereinheiten 10"" beträgt, wenn diese Antenneneinheiten 18 wechselwirkungsfrei, das heißt ohne Beeinflussung durch ihre Umgebung, angeordnet sind.

Dabei wird unter Antennenreichweite die Reichweite einer Antenneneinheit 18 verstanden, in der es noch möglich ist, bei einer definierten Antennenfeldstärke Informationen in Längsrichtung 178 des Leitungsstrangs 102 von einer Informationsträgereinheit 10"" zur nächstliegenden Informationsträgereinheit 10"" zu übertragen.

Somit besteht beispielsweise die Möglichkeit, die Antenneneinheiten 18 der Informationsträgereinheiten 10"" so anzuordnen, dass der Abstand in Kabellängsrichtung 178 maximal der wirksamen Antennenreichweite entspricht, wodurch innerhalb des Abstandes eine Kopplung zwischen den Antenneneinheiten 18 der Informationsträgereinheiten 10"" in Längsrichtung 178 des Leitungsstrangs 102 erfolgt.

Diese vergrößerte wirksame Antennenreichweite aufgrund der Kopplung über parasitäre elektromagnetische Felder 200 zwischen den Antenneneinheiten 18 und den Leitern 190 und 192 ermöglicht es beispielsweise, die Zahl der für das Informationsträgernetzwerk erforderlichen Informationsträgereinheiten 10"" zu reduzieren.

Vorteilhaft kann jedoch auch eine Anordnung der Dipolantennen 70 quer zur Verseilrichtung sein, und insbesondere dann, wenn dadurch möglichst viele oder alle elektrischen Leiter umschlungen werden. Hierdurch findet eine Einkopplung der elektromagnetischen Wellen in möglichst viele elektrische Leiter statt.

Auch bei diesem Ausführungsbeispiel besteht somit ebenfalls die Möglichkeit, über das Informationsträgernetzwerk mit den jeweiligen Sensoren 30 erfassbare physikalische Größen entlang des gesamten Leitungsstrangs 102 des Leitungssatzes 100' abzufragen.

Vorzugsweise sind bei diesem Ausführungsbeispiel des Leitungssatzes 100' die Informationsträgereinheiten 10"" unter dem Mantel 182 oder im Mantel 182 des Leitungsstrangs 102 angeordnet und somit beispielsweise bei Herstellung des Leitungsstrangs 102 in den Mantel 182 eingebettet.

Es besteht aber grundsätzlich auch die Möglichkeit, die Informationsträgereinheiten 10"" in der Art von Aufklebeelementen auf dem Mantel 182 des Leitungsstrangs 102 aufzukleben.

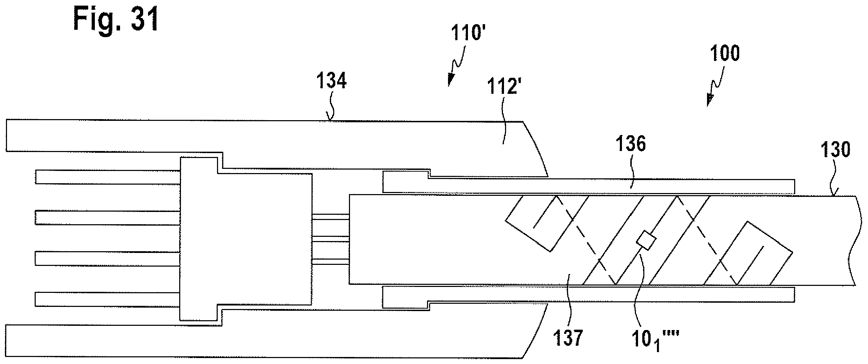

Bei einem weiteren Ausführungsbeispiel eines erfindungsgemäßen Leitungssatzes, dargestellt in Fig. 31, ist die Informationsträgereinheit 10₁"" auf der Mantelfläche 130 des Endstücks 137 angeordnet und durch den Knickschutz 136 abgedeckt, welcher, ähnlich wie in Fig. 17 dargestellt, in den Außengehäuse 112 gehalten ist.

Bei diesem Ausführungsbeispiel ist die Basis 40 ähnlich einem Klebeetikett auf die Mantelfläche 130 aufgeklebt und dadurch an dem Leitungsstrang 102 an einer Stelle unter dem Knickschutz 136 fixiert.

Alternativ dazu kann die Informationsträgereinheit 10"" mit einem das Endstück 137 umschlingenden Verlauf auch bei der Herstellung des Knickschutzes 136 in diesem eingebettet werden, beispielsweise durch Einformen bei der Herstellung des Knickschutzes 136.

Da der Knickschutz 136 aus Kunststoff oder Gummi ist, ist eine Wechselwirkung mit einem Schreib-/Lesegerät 20 problemlos möglich, ohne dass ein aus Metall hergestelltes Außengehäuse 112 des Steckverbinderelements die Wechselwirkung stören kann, und außerdem ist eine parasitäre Feldkopplung mit den Leitungen 190 und 192 im Innenkörper 180 des Leitungsstrangs 102 möglich, um mit den anderen Informationsträgereinheiten 10"" im Leitungsstrang 102 das Informationsträgernetzwerk zu bilden.

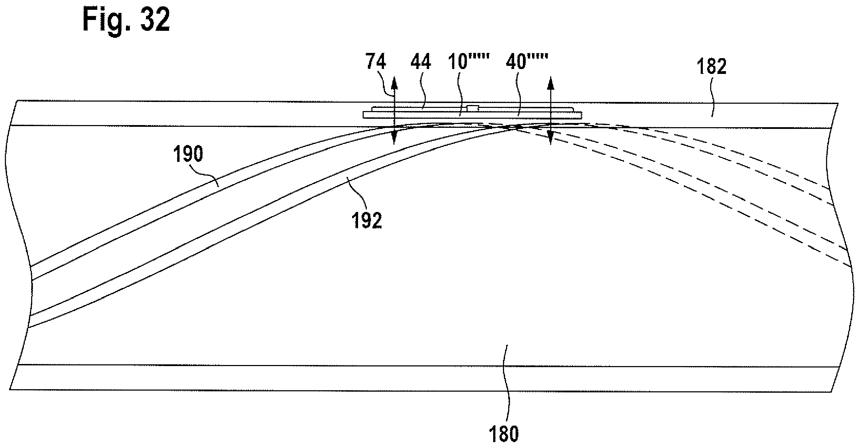

Ein Zugang zu diesem Informationsträgernetzwerk erfolgt beispielsweise über ein mobiles Schreib-/Lesegerät 20 oder über ein einem Gegensteckverbinderelement 210 zugeordnetes Schreib-/Lesegerät 20, wie nachfolgend dargestellt. Für den Fall, dass Dehnungen oder Zugkräfte im Leitungsstrang 102 erfasst werden sollen, kann, wie in Fig. 32 dargestellt, anstelle der Informationsträgereinheit 10"" eine Informationsträgereinheit 10""' gemäß dem sechsten Ausführungsbeispiel eingesetzt werden, wobei in diesem Fall die Informationsträgereinheit 10"'" dann im Leitungsstrang 102, beispielsweise eingebettet in dem Mantel 182 oder fixiert an dem Innenkörper 180, anzuordnen ist.

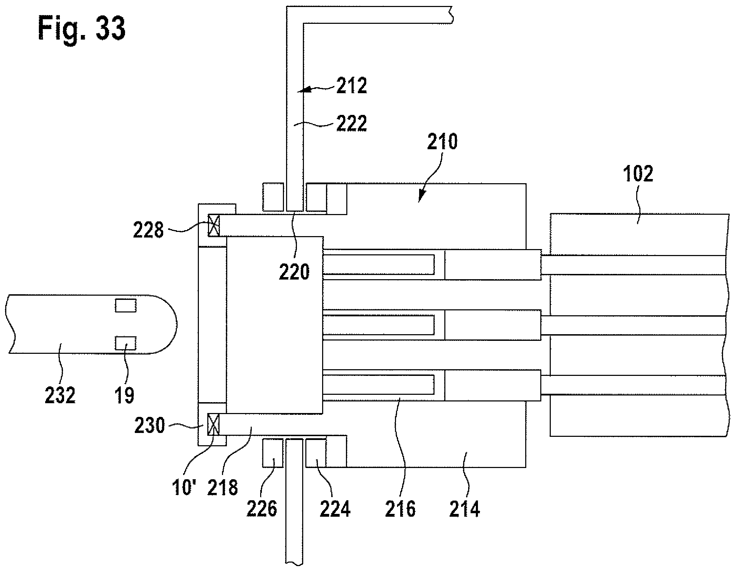

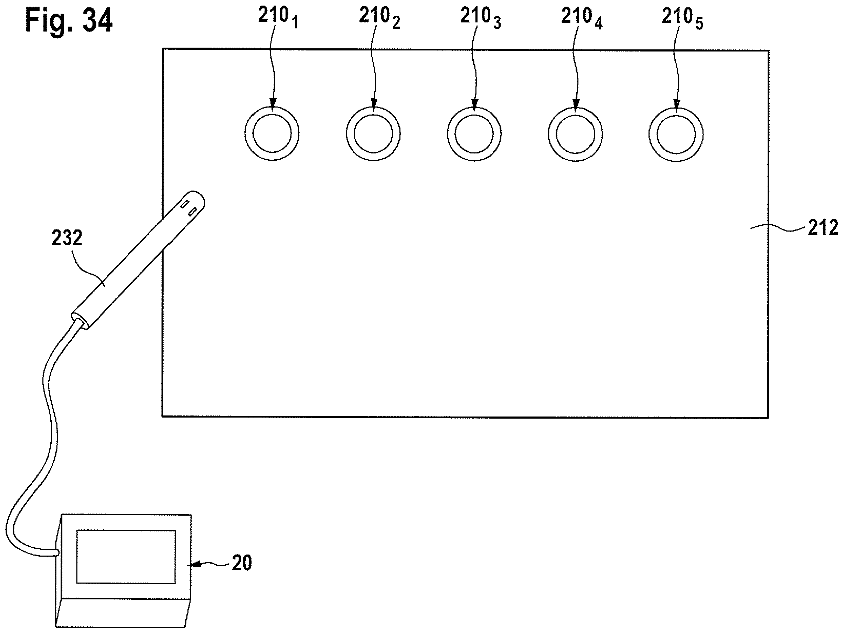

Ein weiteres Ausführungsbeispiel einer in Fig. 33 und 34 dargestellten erfindungsgemäßen Leitungsaufnahmeeinheit, beispielsweise ausgebildet als Gegensteckverbinderelement 210, welches an einem Gerätegehäuse 212 montierbar ist, weist einen Kontaktsockel 214 auf, in welchem Kontakthülsen 216 angeordnet sind.

Der Kontaktsockel 214 ist mit einer ein Basisteil bildenden Montagehülse 218 verbunden, welche ihrerseits einen Durchbruch 220 in einer Gehäusewand 222 durchgreift und an dieser beispielsweise durch auf die Montagehülse 218 aufschraubbare Haltemuttern 224, 226 fixierbar ist.

Um das Gegensteckverbinderelement 210 als Ganzes identifizieren zu können, ist eine Informationsträgereinheit 10' gemäß dem zweiten Ausführungsbeispiel an der Montagehülse 218 an einem sich außerhalb des Gerätegehäuses 212 erstreckenden Bereich derselben gehalten und dabei beispielsweise an einer Stirnseite 228 der Montagehülse angeordnet und von einem elektrisch nichtleitendem Schutzring 230 überdeckt, welcher die Stirnseite 228 der Montagehülse 218 mitsamt der auf dieser angeordneten Informationsträgereinheit 10' im Querschnitt U-förmig übergreift.

Mit einer derartigen, an der Montagehülse 218 angeordneten Informationsträgereinheit 10' besteht die Möglichkeit, selbst dann, wenn die Gehäusewand 222 aus Metall sein sollte, mit einem Lesekopf 232, welcher die Antenneneinheit 19 des Schreib-/Lesegeräts 20 trägt, in einfacher Weise und unter guter Ankopplung die Informationen aus der Informationsträgereinheit 10' ohne Beeinträchtigung durch die Gehäusewand 222 auszulesen und dabei für das Gegensteckverbinderelement 210 relevante Daten zur Verfügung zu stellen.

Beispielsweise ist es denkbar, dass die Informationsträgereinheit 10' Informationen über die Art des Gegensteckverbinderelements 210, dessen Kontaktanordnung und insbesondere auch über die Beschaltung der Kontakthülsen 216 aufweist, so dass die Möglichkeit besteht, wie in Fig. 34 dargestellt, bei einer Vielzahl von an einem Gehäuse 212 montierten Gegensteckverbinderelementen 210₁ bis 210₅ mittels des Schreib-/Lesegeräts 20 zu erkennen, welches der Gegensteckverbinderelemente 210₁ bis 210₅ wie beschaltet ist, um herauszufinden, in welches der Gegensteckverbinderelemente 210₁ bis 210₅ ein entsprechendes Steckverbinderelement eingesteckt werden soll (Fig. 34).

Darüber hinaus besteht auch die Möglichkeit, insbesondere bei komplexen Schaltungen mit einer Vielzahl vorgesehener Gegensteckverbinderelemente 210 die einzelnen Steckverbindungen im Detail zu überprüfen.

Der Vorteil der erfindungsgemäßen Lösung ist darin zu sehen, dass bei geeigneten ringförmigen Ausbildung der Basis 40' und der auf dieser verlaufenden Leiterbahnen 44 eine abstandssensibel reagierende Magnetspule zur Verfügung steht, so dass eine Kommunikation mit der ebenfalls beispielsweise als Spule ausgebildeten Antenneneinheit 19 des Schreib-/Lesegeräts 20 im Lesekopf 232 nur über sehr geringe Abstände möglich ist. Dies verhindert, dass irrtümliche Zuordnungen und Falschauslesungen bei einer Vielzahl von in einer Gehäusewand 222 angeordneten Gegensteckverbinderelementen 210₁ bis 210₅ erfolgen.

Wird beispielsweise der Lesekopf 232 mit der Antenneneinheit 19 in Richtung der Montagehülse 218 bewegt, so erfolgt eine Wechselwirkung mit der Informationsträgereinheit 10' im Wesentlichen dann, wenn die Antenneneinheit 19 innerhalb des Durchbruchs 43 der Basis 40' der Informationsträgereinheit 10' steht und somit das diesen durchsetzende Magnetfeld der durch die Leiterbahn 44 gebildeten Spule beeinflusst.

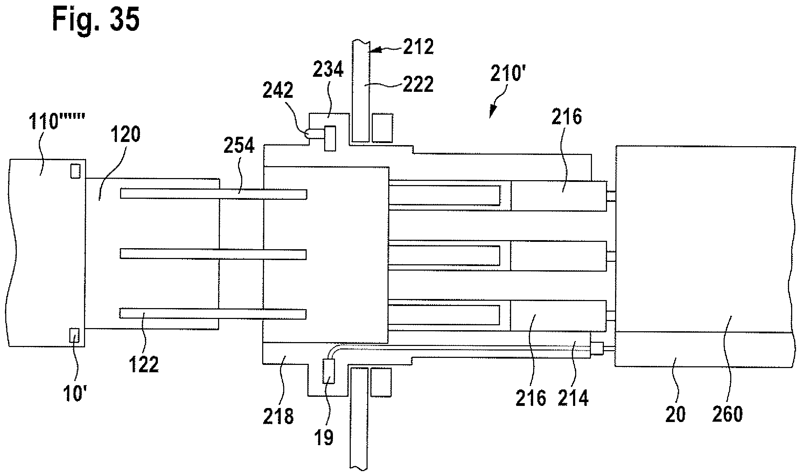

Bei einem weiteren Ausführungsbeispiel einer Leitungsaufnahmeeinheit, ausgebildet als Gegensteckverbinderelement 210', ist, wie in Fig. 35 dargestellt, die Antenneneinheit 19 des beispielsweise separat von der Montagehülse 218 angeordneten Schreib-/Lesegeräts 20 in der Montagehülse 218 angeordnet, beispielsweise in einem Flanschelement 234 desselben, wobei das Flanschelement 234 entweder zweigeteilt ausgebildet sein kann, so dass die Antenneneinheit 19 einlegbar ist, oder so ausgebildet sein kann, dass die Antenneneinheit 19 in diese eingebettet ist.

Das Schreib-/Lesegerät 20 kommuniziert dabei mit einer Informationsträgereinheit 10', die in einem Steckverbinderelement 110""" angeordnet ist, welches beispielsweise den Kontaktsockel 120 mit Steckkontakten 122 aufweist, die in die Kontakthülsen 216 einsteckbar sind.

Wird somit das Steckverbinderelement 110""" mit seinen Steckkontakten 122 in die Kontakthülsen 216 eingesteckt, so liegen die Antenneneinheit 18 der Informationsträgereinheit 10' in dem Steckverbinder 110""" und die Antenneneinheit 19 der Schreib-/Leseeinheit 20 so nahe beisammen, dass deren Antenneneinheiten 19 und 18 über elektromagnetische Felder in Wechselwirkung treten um Informationen austauschen zu können.

Somit besteht beispielsweise die Möglichkeit, dass das dem Steckverbinderelement 210' zugeordnete Schreib-/Lesegerät 20 in der Lage ist, zu erkennen, ob das Steckverbinderelement 110""" das richtige Steckverbinderelement ist, das in das Gegensteckverbinderelement 210' eingesteckt werden soll. Diese Information ist in der Informationsträgereinheit 10' im Steckverbinderelement 110""" gespeichert und kann in einfacher Weise übertragen werden.

Beispielsweise besteht in diesem Fall die Möglichkeit, bei falscher oder richtiger Steckverbindung ein an der Montagehülse 218 vorgesehenes Anzeigeelement 242 oder mehrere derartiger Anzeigeelemente 242 durch das Schreib-/Lesegerät 20 anzusteuern, so dass diese für einen Benutzer optisch und/oder akustisch anzeigen, ob das Steckverbinderelement 110""" das Richtige ist oder nicht.

Damit lässt sich in einfacher Weise absichern, dass in das jeweilige Gegensteckverbinderelement 210' nur das richtige Steckverbinderelement 110""" eingesteckt wird.

Beispielsweise besteht außerdem die Möglichkeit, in der Informationsträgereinheit 10' im Steckverbinderelement 110""" die Information darüber abzuspeichern, mit welchem Gerät, mit welchem Messkopf oder mit welcher Applikationseinrichtung das Steckverbinderelement 110""" verbunden ist, so dass - beispielsweise bei hochsicherheitsrelevanten Anwendungen - eine Überprüfung der hergestellten Steckverbindung zwischen dem Gegensteckverbinderelement 210' und dem Steckverbinderelement 110""" unmittelbar für einen Benutzer bei Herstellung derselben überprüfbar ist. Eine Anwendung für eine derartige Absicherung von Steckverbindungen ist beispielsweise der Bereich medizinischer Geräte.

Alternativ oder ergänzend dazu ist es ebenfalls möglich, dass das der Montagehülse 218 zugeordnete Schreib-/Lesegerät 20 mit einer im Gehäuse 212 angeordneten und den Kontakthülsen 216 vorgeschalteten Sicherheitsschaltung 260 zusammenwirkt, um die Sicherheitsschaltung 260 entsprechend der hergestellten Steckverbindung zwischen dem Gegensteckverbinderelement 210' und dem Steckverbinderelement 110""" anzusteuern, so dass die Sicherheitsschaltvorrichtung 260 entweder eine Verbindung zu einem innerhalb des Gehäuses 212 angeordneten Gerät aktiviert und somit eine Verbindung zwischen diesem Gerät und den Kontakthülsen 216 herstellt, nämlich dann, wenn das Steckverbinderelement 110""" das Richtige ist und insbesondere mit der richtigen Einheit verbunden ist, oder eine Verbindung zu dem Gerät deaktiviert und somit die Verbindung zu den Kontakthülsen 216 unterbricht, nämlich dann, wenn in das Gegensteckverbinderelement 210' das falsche Steckverbinderelement 110""" eingesteckt wurde und dieser Irrtum nicht bemerkt wurde.

Alternativ oder ergänzend ist es bei diesem Ausführungsbeispiel auch möglich, den Leitungssatz 100 als solchen über die in der Informationsträgereinheit 10' gespeicherten Daten als solchen zu erfassen oder bei einem Leitungssatz 100' die von den Sensoren 30 der Informationsträgereinheiten 10"", die im Leitungsstrang 102 angeordnet sind, erfassten Werte über das Informationsträgernetzwerk auszulesen.

## Patentansprüche

1. Leitungsaufnahmeeinheit (104,210) für einen Leitungsstrang, welcher eine Informationsträgereinheit (10) zugeordnet ist, aus welcher Informationen
durch elektromagnetische Feldkopplung auslesbar sind,
**dadurch gekennzeichnet, dass** aus der Informationsträgereinheit (10) Daten über den konstruktiven Aufbau der Leitungsaufnahmeeinheit (104, 210) auslesbar sind, und/oder dass aus der Informationsträgereinheit (10) Funktionsdaten auslesbar sind, die Informationen darüber aufweisen, wie eine elektrische Vorschaltung des Leitungsstrangs oder der Kontakte der Leitungsaufnahmeeinheit vorzunehmen ist.

2. Leitungsaufnahmeeinheit nach Anspruch 1, **dadurch gekennzeichnet, dass** aus der Informationsträgereinheit (10) Daten eines die Leitungsaufnahmeeinheit (104) umfassenden Leitungssatzes (100) auslesbar sind.

3. Leitungsaufnahmeeinheit nach einem der voranstehenden Ansprüche, **dadurch gekennzeichnet, dass** aus der Informationsträgereinheit (10) Messdaten des Leitungssatzes auslesbar sind.

4. Leitungsaufnahmeeinheit nach einem der voranstehenden Ansprüche, **dadurch gekennzeichnet, dass** aus der Informationsträgereinheit (10) Benutzungsdaten auslesbar sind.

5. Leitungsaufnahmeeinheit nach einem der voranstehenden Ansprüche, **dadurch gekennzeichnet, dass** die Informationsträgereinheit (10) mit einer weiteren Informationsträgereinheit (10) kommuniziert.

6. Leitungsaufnahmeeinheit nach Anspruch 4, **dadurch gekennzeichnet, dass** die Informationsträgereinheit (10) mit mindestens einer Informationsträgereinheit (10) in dem Leitungsstrang (102) kommuniziert.

7. Leitungsaufnahmeeinheit nach Anspruch 6, **dadurch gekennzeichnet, dass** die Informationsträgereinheit (10) mit der mindestens einen Informationsträgereinheit (10) im Leitungsstrang (102) kontaktierungsfrei kommuniziert.

8. Leitungsaufnahmeeinheit nach einem der voranstehenden Ansprüche, **dadurch gekennzeichnet, dass** die Informationsträgereinheit (10) mindestens einen Speicher (14) aufweist.

9. Leitungsaufnahmeeinheit nach Anspruch 8, **dadurch gekennzeichnet, dass** der Speicher (14) ein Speicherfeld (22) aufweist, in welchem einmalig eingeschriebene Informationen schreibgeschützt gespeichert sind.

10. Leitungsaufnahmeeinheit nach Anspruch 8 oder 9, **dadurch gekennzeichnet, dass** der Speicher (14) ein Speicherfeld (24) aufweist, in welchem Informationen durch einen Zugangscode schreibgeschützt gespeichert sind.

11. Leitungsaufnahmeeinheit nach einem der Ansprüche 8 bis 10, **dadurch gekennzeichnet, dass** der Speicher (14) ein Speicherfeld (28) aufweist, welches frei mit Informationen beschreibbar ist.

12. Leitungsaufnahmeeinheit nach einem der voranstehenden Ansprüche, **dadurch gekennzeichnet, dass** die mindestens eine Informationsträgereinheit (10) Messwerte eines zugeordneten Sensors (30) erfasst.

13. Leitungsaufnahmeeinheit nach Anspruch 12, **dadurch gekennzeichnet, dass** der Sensor (30) mindestens eine der Zustandsgrößen wie Strahlung, Temperatur, Zug, Druck, Dehnung oder Feuchtigkeit erfasst.

## Claims

1. Cable receiving unit (104, 210) for a cable portion, there being associated with the cable receiving unit an information carrier unit (10), from which information can be read out by electromagnetic field coupling, **characterized in that** data concerning the structural design of the cable receiving unit (104, 210) can be read out from the information carrier unit (10), and/or **in**
**that** functional data can be read out from the information carrier unit (10), which functional data comprise information on how the electrical interconnection of the cable portion or of the contacts of the cable receiving unit (104) should be carried out.

2. Cable receiving unit according to Claim 1, **characterized in that** data of a cable assembly (100) comprising the cable receiving unit (104) can be read out from the information carrier unit (10).

3. Cable receiving unit according to either of the preceding claims, **characterized in that** measurement data of the cable assembly can be read out from the information carrier unit (10).

4. Cable receiving unit according to any of the preceding claims, **characterized in that** use data can be read out from the information carrier unit (10).

5. Cable receiving unit according to any of the preceding claims, **characterized in that** the information carrier unit (10) communicates with a further information carrier unit (10).

6. Cable receiving unit according to Claim 4, **characterized in that** the information carrier unit (10) communicates with at least one information carrier unit (10) in the cable portion (102).

7. Cable receiving unit according to Claim 6, **characterized in that** the information carrier unit (10) communicates in a non-contact manner with the at least one information carrier unit (10) in the cable portion (102).

8. Cable receiving unit according to any of the preceding claims, **characterized in that** the information carrier unit (10) has at least one memory (14).

9. Cable receiving unit according to Claim 8, **characterized in that** the memory (14) has a memory area (22) in which items of information once written are stored such that they are write-protected.

10. Cable receiving unit according to Claim 8 or 9, **characterized in that** the memory (14) has a memory area (24) in which items of information are stored such that they are write-protected by an access code.

11. Cable receiving unit according to any of Claims 8 to 10, **characterized in that** the memory (14) has a memory area (28) to which information can be freely written.

12. Cable receiving unit according to any of the preceding claims, **characterized in that** the at least one information carrier unit (10) picks up measured values of an associated sensor (30).

13. Cable receiving unit according to Claim 12, **characterized in that** the sensor (30) picks up at least one of the state variables such as radiation, temperature, tension, pressure, elongation or moisture.

## Revendications

1. Unité de logement de câbles (104, 210) pour un faisceau de câbles, à laquelle est associée une unité de support d'informations (10), à partir de laquelle des informations sont lisibles par couplage de champ électromagnétique,
**caractérisée en ce que** des données concernant la structure de l'unité de logement de câbles (104, 210) sont lisibles à partir de l'unité de support d'informations (10), et/ou que des données fonctionnelles, qui présentent des informations concernant la façon dont un montage amont électrique du faisceau de câbles ou des contacts de l'unité de logement de câbles doit être réalisé, sont lisibles à partir de l'unité de support d'informations (10).

2. Unité de logement de câbles selon la revendication 1, **caractérisée en ce que** des données d'un jeu de câbles (100) comprenant l'unité de logement de câbles (104) sont lisibles à partir de l'unité de support d'informations (10).

3. Unité de logement de câbles selon l'une quelconque des revendications précédentes, **caractérisée en ce que** des données de mesure du jeu de câbles sont lisibles à partir de l'unité de support d'informations (10) .

4. Unité de logement de câbles selon l'une quelconque des revendications précédentes, **caractérisée en ce que** des données d'utilisation sont lisibles à partir de l'unité de support d'informations (10).

5. Unité de logement de câbles selon l'une quelconque des revendications précédentes, **caractérisée en ce que** l'unité de support d'informations (10) communique avec une autre unité de support d'informations (10).

6. Unité de logement de câbles selon la revendication 4, **caractérisée en ce que** l'unité de support d'informations (10) communique avec au moins une unité de support d'informations (10) dans le faisceau de câbles (102).

7. Unité de logement de câbles selon la revendication 6, **caractérisée en ce que** l'unité de support d'informations (10) communique sans mise en contact avec l'au moins une unité de support d'informations (10) dans le faisceau de câbles (102).

8. Unité de logement de câbles selon l'une quelconque des revendications précédentes, **caractérisée en ce que** l'unité de support d'informations (10) présente au moins une mémoire (14).

9. Unité de logement de câbles selon la revendication 8, **caractérisée en ce que** la mémoire (14) présente un champ de mémoire (22), dans lequel des informations inscrites une seule fois sont mises en mémoire en lecture seule.

10. Unité de logement de câbles selon la revendication 8 ou 9, **caractérisée en ce que** la mémoire (14) présente un champ de mémoire (24), dans lequel des informations sont mises en mémoire en lecture seule par un code d'accès.

11. Unité de logement de câbles selon l'une quelconque des revendications 8 à 10, **caractérisée en ce que** la mémoire (14) présente un champ de mémoire (28), lequel est enregistrable librement avec des informations.

12. Unité de logement de câbles selon l'une quelconque des revendications précédentes, **caractérisée en ce que** l'au moins une unité de support d'informations (10) détecte des valeurs de mesure d'un capteur (30) associé.

13. Unité de logement de câbles selon la revendication 12, **caractérisée en ce que** le capteur (30) détecte au moins une des grandeurs d'état telle que rayonnement, température, traction, pression, allongement ou humidité.
